# EUROPEAN PATENT APPLICATION

(11) **EP 4 814 220 A1**
(43) Date of publication of application: **30.09.2026**
(21) Application number: 23959618.2
(22) Date of filing: 19.12.2023
(51) Int. Cl.: E04B 1/343, E04B 1/38, E04H 1/00, E04G 25/02, E04G 17/04, F16D 1/00, F16B 1/00

(54) **RAPID DEPLOYMENT MODULAR SYSTEM**

(30) Priority: 21.11.2023 UA 202305596
(71) Applicant: Vlasiichuk, Kostiantyn Myroslavovych, Odesa, 65012 (UA)
(72) Inventor: Vlasiichuk, Kostiantyn Myroslavovych, Odesa, 65012 (UA)
(74) Representative: Babeluk Patentanwälte GmbH
(86) International application number: PCT/UA2023/000063
(87) International publication number: WO 2025/110980

(57) **Abstract**

A rapid deployment modular system includes a frame (1), and panel elements (9) with holes (10) for the passage of support elements (7) therethrough. The frame (1) comprises horizontally mountable upper and lower frame elements (3, 2) with support elements (7) mounted vertically therein. The panel elements (9) are configured with means (17, 17.1, 17.2) for joining the panel elements (9) to one another to form a wall (19). The modular system is configured so that vertically mounted support elements (7) can be secured in a working position with the formation of a detachable joint and so that at least two adjacently mounted horizontal frame elements (2, 3) can be locked in a working position. The frame elements (2, 3) contain means (47, 45) for mounting elements (7) horizontally in a working position to form, together with the panel elements (9) through which they are passed, a floor (20) and/ or a ceiling or roof (21). The horizontally mountable lower and upper frame elements (2, 3) are configured to be capable of forming a square. The means (17, 17.1, 17.2) for joining the panel elements (9) to one another are configured on at least two sides of the panel elements (9), across the entire length of said sides.

## Description

The invention relates to the construction industry, in particular to building structures, and may be used in the erection of frame buildings and other multi-purpose rapid-deployment structures with the possibility of quick and simplified assembly of components, including the frame, panels, as well as rapid disassembly and repeated use.

From the prior art, a building structure is known (US 3,898,779 (A), IPC E04B1/12; E04B2/68; E04B2/86; E04C2/20, published 12.08.1975), comprising foundation means supporting a plurality of load-bearing wall panels assembled side by side, wherein each said panel extends over the full height of the wall of the structure, and each panel includes a foam core; an organic resinous material of high density formed as a generally rectangular panel having spaced main surfaces; a surface layer attached to at least one of said main surfaces to provide a finished wall surface; a locking means on each side edge of the panel for alignment and interconnection of the panel with adjacent panels after assembly of the structure; a top channel means formed within and extending through the upper edge of the panel, the said top channel being narrower than the thickness of the panel and having a trapezoidal cross-section; a top beam having a trapezoidal cross-section corresponding to the shape of the cross-section of the said top channel means; a tensioning means attached at one end to the foundation and extending vertically through the panel and the top beam; an adjustment means securing the tensioning means to the top beam for drawing in the top beam and the top channel; means for preventing splitting of the panel and for distributing the compressive load generated by the tensioning means.

Each of the said wall panels includes corner cut-outs extending along the length of the panel, wherein the cut-outs of five adjacent panels interact to form a recess at the joint between adjacent panels, and the structure further includes a protective strip for each said recess for covering said joint.

Each of the said wall panels includes at least one cavity extending from the upper edge channel means through the panel to its lower portion, wherein said cavity is adapted to receive said means.

The top beam covers the joint between adjacent panels for alignment of said panels.

The building structure further includes a fixing means attached to the foundation, wherein said fixing means has a trapezoidal cross-section; and a locator channel formed within and extending across the lower edge of each of the said panels, wherein said locator channel is already intended for said locator channel; of said panels on said foundation.

The said tensioning means further extends through the said fixing means for pulling the panel downward toward the said fixing means, thereby rigidly securing the panel to the foundation.

The said locking means includes a tongue-and-groove arrangement, comprising a tongue means on one side edge of each panel and a groove on the opposite side edge of each panel.

The building structure further includes a plurality of ceiling panels adapted to connect the tops of the said wall panels to form a building enclosure, wherein the said top beam includes a cross member formed integrally on each of the said ceiling panels.

Each of the said ceiling panels includes two spaced cross beams adapted to interact with channel means formed along the upper edges of the spaced wall panels, wherein the said ceiling panel spans the said spaced wall panels.

The drawbacks of the known solution include the following:
The known building structure is bulky and difficult to install; the erection of a building requires special equipment, since the wall panels have a height corresponding to the height of the building, as well as other large and bulky components, such as a monolithic foundation slab. At the same time, the processes of erection and dismantling are complex and time-consuming.

In addition, the trapezoidal means on the foundation slab and on the roof elements for installing the wall panels, as well as the fixing elements, are insufficiently reliable and do not ensure the stability of a building constructed using the known building system, while the use of such a building in conditions where exposure to blast waves and impact of debris and bullets is possible is unsafe and may lead to destruction of the building and wall panels. In case of damage to the wall panels, it is impossible to replace a part of the wall or a separate section.

The said disadvantages limit the scope of application, including use in field conditions and in conditions of military operations because the known structure is complex in use and does not ensure the rapid and simplified erection and dismantling of buildings of various purposes without the need for special equipment. It also does not provide high strength, durability, and reliability of the resulting building. At the same time, the known building system results in a large weight of components and high costs for erection and dismantling.

Also known from the prior art is a modular shelter assembly kit relating to frame structures (US Patent US 10,612,233 (B1), IPC E04B 1/343, E04B 1/41, E04B 1/58, E04B 1/61, E04H 9/10, E04H 9/14, E04H 9/16, E04B 1/00, published 07.04.2020), which comprises:
a top connector;
a first upper horizontal beam having an inner groove, an outer groove, an inner protrusion, and a hook with a recess directed upward;
a second upper horizontal beam having an inner groove, an outer groove, an inner projection, and a hook with a recess directed downward;
a roof panel;
a vertical support column;
an internal wall panel;
an external wall panel;
a first lower horizontal beam having an inner groove, an outer groove, an inner projection, and a hook with a recess directed upward;
a second lower horizontal beam having an inner groove, an outer groove, an inner projection, and a hook with a recess directed downward;
a floor panel; and
a lower connector,
wherein the vertical support column comprises a plurality of upper teeth and a plurality of lower teeth,
wherein the recess of the first upper horizontal beam and the recess of the second upper horizontal beam are joined such that the hook of the first upper horizontal beam and the hook of the second upper horizontal beam form an upper transverse connection, the upper transverse connection is located beneath the top connector, and the vertical support column encloses the upper transverse connection when the plurality of upper teeth of the vertical support column engages the top connector,
wherein the recess of the first lower horizontal beam and the recess of the second lower horizontal beam are joined such that the hook of the first lower horizontal beam and the hook of the second lower horizontal beam form a lower transverse connection, the lower transverse connection being located above the lower connector, and the vertical support column covers the lower transverse connection when a row of lower teeth of the vertical support column engages the lower connector,
therein the roof panel is positioned above the inner projection of the first upper horizontal beam and the inner projection of the second upper horizontal beam, and the floor panel is positioned above the inner projection of the first lower horizontal beam and the inner projection of the second lower horizontal beam, and
wherein the inner wall panel is engaged with the inner groove of the first upper horizontal beam or the inner groove of the second upper horizontal beam, and with the inner groove of the first lower horizontal beam or the inner groove of the second lower horizontal beam.
therein the outer wall panel is engaged with the outer groove of the first upper horizontal beam or the outer groove of the second upper horizontal beam, as well as with the outer groove of the first lower horizontal beam or the outer groove of the second lower horizontal beam.

The known structure is intended for rapid assembly and can be used in remote locations; unlike traditional structures, it does not require the use of power tools or heavy equipment for assembly, but nevertheless has a number of drawbacks.

The structure formed using the known analogue does not have high stability, rigidity, and reliability, since the vertical frame elements and the upper and lower horizontal beams are connected by upper and lower connectors, respectively, which are inserted into corresponding openings; thus, there is no fixation of the upper and lower connectors. Under wave or mechanical impact, the upper connectors may simply come out or slip off, which leads to the collapse of the entire frame structure and, consequently, of the erected building.

At the same time, the room space of the constructed buildings is limited by integral wall, floor, and roof panels, and it is impossible to form various room configurations and different sizes depending on needs and/or intended purpose.

Furthermore, as in the previous analogue, solid walls, when subjected to blast waves or impacted by debris, may be completely destroyed. The use of integral wall panels excludes the possibility of replacing their individual parts.

With prolonged use of the known construction, enlargement of the holes and grooves through which the vertical and horizontal structural elements are connected may occur, which results in reduced rigidity, stability, and reliability of the erected building.

Also known from the prior art is a modular lightweight structural system based on panels with pre-cut grooves and slots of standard dimensions (US Patent US 10,450,736 (B2), IPC A01G 9/02; E04B 1/12; E04B 1/18; E04B 2/51, published 22.10.2019), which includes panels, each panel comprising one or more channels formed in a foam body, wherein the channels are centrally located between adjacent fractal modules of the entire modular panel. The channels are configured to receive splines (e.g., dimensional lumber). The modular wall system panels consist of multiple panels fastened together by splines. The splines may be configured and installed to connect two adjacent panels.

The roof panels are provided with grooves into which battens are installed.

Although the known system can be used in remote locations, enabling the construction of houses without the use of special equipment and skilled labour, it has a number of drawbacks.

The connection of components is insufficiently reliable and does not provide proper fixation, which results in insufficient stability, rigidity, and strength of buildings constructed using the known system.

The field of application of the known system is limited due to the selected low-strength materials and the structural design; in particular, the known system cannot be used in areas with strong winds, seismic risk zones, military operation zones, and other similar environments.

Also known from the prior art, selected as the closest analogue, is a modular building system (EP Patent EP 3,447,207 (B1), IPC E04B 2/02; E04B 2/46; E04B 2/48; E04B 2/58, published 21.07.2021), comprising a modular half-block, including:
two main surfaces, designated as an inner main surface and an outer main surface;
two side surfaces, left and right, and two end surfaces, upper and lower, referred to as contact surfaces;
wherein when the half-block is connected to another identical half-block via corresponding contact surfaces, the main surfaces of the half-blocks form an adjacent surface;
and wherein each of the contact surfaces comprises a fitting with an inclined protrusion and a fitting with an inclined recess, such that the protrusion is in contact with the recess of the other identical half-block when one half-block is aligned with another identical half-block;
and wherein the inner surface comprises one or more fittings for connection with another identical half-block via corresponding inner main surfaces to form a block with another identical half-block;

The fittings of the contact surfaces have 90° rotational symmetry about a central axis perpendicular to the main surface.

In the half-block of the modular structure, the inner main surface comprises one or more channels open for receiving a longitudinal support element, wherein the channels are preferably semi-cylindrical.

The half-block of the modular structure comprises two horizontal channels and two vertical channels, or comprises two vertical channels and one horizontal channel.

The inner main surface of the half-block comprises one or more connecting elements for connecting the half-block to another identical half-block when the half-block is assembled with another identical half-block.

The half-block of the modular structure comprises a coating on its outer main surface.

The half-block of the modular structure is obtained by pressure moulding, in particular by pressure moulding of aggregate or layered composite materials; or obtained by injection moulding, in particular by injection moulding of ceramic, composite, or polymer materials.

The wall of the modular structure comprises a plurality of half-blocks inserted into one another by their side faces and end faces.

The modular building system kit comprises a supporting structure for the modular construction and includes a plurality of half-blocks, wherein the supporting structure comprises a lower beam, an upper beam, and a plurality of rods connecting the lower beam to the upper beam; in particular, the rods are parallel to each other, wherein the rods are pipes, and the pipes are cylindrical, and the lower and upper beams are made of sheet profile.

The drawbacks of the closest analogue include the following.

Due to the half-block being formed with a complex configuration, with many faces, recesses, and projections, as well as numerous openings, the known modular building system is characterised by complexity of design, manufacture, and use, since the system comprises a large number of half-blocks, which are the main components used to form a building with the aid of supporting structures.

The complex configuration of the half-blocks also results in a large number of thermal bridges, the possibility of incomplete contact, and uneven wall surfaces, which reduces the insulating properties, rigidity, and reliability of the known structure and limits its field of application.

Therein, the supporting structure is unstable and unreliable, since the longitudinal frame elements are made in the form of profiled sheets with a portion for receiving vertical support elements in the form of a curved beam with a free end, which may deflect under the weight of the panels and the vertical and longitudinal support elements, making the known structure unstable, insufficiently rigid, stable, and reliable.

Furthermore, the known modular building system does not provide half-blocks or other small panels for forming a floor from small components, nor longitudinal support elements for holding them, nor means for installing them on the longitudinal frame elements; this does not allow the complete assembly of a building including a floor, which could be immediately used for its intended purpose under various conditions.

In addition, the known system does not provide the possibility of creating buildings of different configurations with different room sizes, which limits its field of application, since the system does not ensure longitudinal connection of multiple longitudinal frame elements.

Therein, in the known system there is also no fixation of the vertical supports in the installed position, nor of other structural elements. After assembly of the last upper block and completion of wall assembly, it is fixed by assembling the upper longitudinal frame element made of sheet profile. In the known system, blocks formed from half-blocks surround the structure, creating a single discontinuous surface. Such a configuration, without fixation of at least the vertical supports in the longitudinal frame elements, does not provide rigidity and stability of the structure, and consequently its reliability, even when used under ordinary conditions without exposure to natural factors in various zones, blast waves, and debris in military operation zones.

The invention is based on the task of creating a new rapid deployment modular system with a simplified design of components and increased rigidity, stability, and reliability of the system, with simplified manufacturing and use, simplified rapid assembly, which enables fast construction of fully completed structures of various configurations depending on needs and intended purpose, suitable for use in different terrains, including combat zones, seismic risk zones, and other areas, for immediate use.

The stated problem is solved by providing a rapid deployment modular system comprising a frame including upper and lower longitudinal frame elements installed horizontally. Vertical support elements are connected to the horizontally arranged lower and upper longitudinal frame elements; the system includes panel elements with openings for passing the support elements through them, and with means for connecting one panel element to another to form a wall; *according to the invention*, the wall is configured to enable fixation of vertically installed support elements in a working position to form a detachable connection and to enable locking in the working position of at least two adjacent horizontally installed longitudinal frame elements, which also include means for installing horizontal support elements for forming a floor and/or ceiling or roof, which are arranged horizontally in the operating position and, together with the panel elements through which they pass, form a floor and/or ceiling or roof respectively, wherein the horizontally installed lower and upper longitudinal frame elements are formed along the perimeter with four sides forming a polygon, while the means for connecting one panel element to another are provided on at least two lateral sides of the panel elements along the length of these sides, enabling the panel elements to be interconnected.

Therein, *according to the invention*, the vertically installed support element comprises, at its lower end portion, slots for passage of a lower rod contained in or installed in a socket or sleeve fixed in the lower longitudinal frame element, thereby fixing the support element in the operating position by partial rotation about its longitudinal axis.

Therein, *according to the invention*, the system includes a door unit which, in its lower part, has at least two pipe sections of the same diameter as the vertically installed support elements in the operating position, fixed on both sides by wall panels formed from panel elements having recesses, and in its upper part corresponding sockets or sleeves, which are intended for fixation by short support elements to the lower side of the upper longitudinal frame element with locking in the operating position, as well as a panel with a cut-out in its lower part corresponding to protrusions on the frame of the door unit for fixing the doors in the upper part.

Furthermore, *according to the invention*, the upper longitudinal frame element comprises a lower L-shaped or U-shaped part and an upper L-shaped or U-shaped part, wherein the lower part is provided with means for receiving fastening elements that, in the operating position, secure the upper and lower L-shaped or U-shaped parts together.

Therein, *according to the invention*, the upper longitudinal frame element comprises a lower L-shaped or U-shaped part and an upper L-shaped or U-shaped part, wherein the lower part is provided with means for receiving fastening elements that, in the operating position, secure the upper and lower L-shaped or U-shaped parts together, wherein the means for receiving fastening elements and the fastening elements have a ring-shaped cross-section of the body and are provided with slots; the fastening element has a flat upper end portion wider than the diameter of its body and is configured to rotate and lock the upper L-shaped or U-shaped part in the operating position.

Therein, *according to the invention*, the lower longitudinal frame elements are polygonal in cross-section, comprise openings for installing vertical support elements, and recesses for installing horizontal support elements for forming a floor.

Therein, *according to the invention*, the vertical support elements are formed as pipes with a circular cross-section and have vertical slots in their upper part, which in the operating position of the support element are located above the openings in the lower part of the upper longitudinal frame elements, and by inserting a metal plate or other locking means through these slots, all panel elements through which the support element passes are fixed in compression to the lower longitudinal frame element in the vertical direction.

Therein, *according to the invention*, the horizontal support elements of the floor and roof are formed as pipes with a circular cross-section and have, at their ends, means for installation in the upper and lower longitudinal frame elements for forming a floor and/or ceiling.

Therein, *according to the invention*, the means for connecting one panel element to another are formed as recesses on one side or sides and protrusions on the other side or sides.

Furthermore, *according to the invention*, the means for connecting one panel element to another are formed as protrusions along the perimeter of the panel elements, and the panel elements are configured to allow either of their two working sides to be oriented outward.

Therein, *according to the invention*, the system includes L-shaped corner connectors connecting the longitudinal frame elements at a 90° angle, with the support elements being positioned and fixed therein by rotation about the axis of the support element, thereby locking in the operating position at least two adjacent horizontally installed longitudinal frame elements.

Therein, *according to the invention*, the system includes intermediate T-shaped connectors for connecting longitudinal frame elements along their length, with the support elements being positioned and fixed therein by rotation about the axis of the support element, thereby locking in the operating position at least three adjacent horizontally installed longitudinal frame elements.

Therein, *according to the invention*, the system includes intermediate X-shaped connectors for connecting longitudinal frame elements along their length, with the support elements being positioned and fixed therein by rotation about the axis of the support element, thereby locking in the operating position at least four adjacent horizontally installed longitudinal frame elements.

Therein, *according to the invention*, the longitudinal frame elements together with the connectors form upper and lower frame structures, each of which is divided into sections by longitudinal frame elements connected at the centre of each frame by an X-shaped connector.

Therein, *according to the invention*, the system includes intermediate I-shaped connectors for converting an L-shaped connector into a T-shaped connector, and a T-shaped connector into an X-shaped connector, by attachment through corresponding openings in the side surface of the L-shaped connectors and T-shaped connectors.

Furthermore, *according to the invention*, the system includes corner wall elements which, in the operating position, are threaded onto the support elements and installed on the corner connectors with connection to the panel elements.

Furthermore, *according to the invention*, the system includes intermediate wall elements which, in the operating position, are threaded onto the support elements and installed on intermediate connectors, with connection to panel elements and/or window units and/or a door unit.

Therein, *according to the invention*, the system includes at least one door unit, which is configured to be connectable to panel elements and/or intermediate elements installed on intermediate connectors, and comprises at least one opening for the passage of a support element.

Furthermore, *according to the invention*, the system includes at least one window unit, which is configured to be connectable to panel elements and/or intermediate elements installed on intermediate connectors, and comprises openings for the passage of support elements.

Therein, *according to the invention*, the system is configured to allow modification of the configuration of the resulting structure.

Therein, *according to the invention*, in the modular system the filling material of the panel element is polyurethane foam (PUF) or another filler material that has the property of deep penetration into the structure of the materials of the external and internal (front and rear) panel coatings, with the ability to bond and reproduce the required shape of the panel element.

The features of the proposed technical solution constitute essential features of the claimed invention, and their combination enables the achievement of the expected technical result, namely providing accelerated and simplified deployment (erection) of structures that are fully ready for use, with increased stability, rigidity, and reliability for various purposes, with the possibility of repeated disassembly and assembly, and with different configurations and dimensions depending on requirements, allowing the structures to be assembled and used in different locations, including remote areas, seismic-risk zones, and combat zones and other environments, without the need for heavy machinery for transporting the components of the system or qualified personnel for assembling buildings using the claimed system, thereby simplifying the structure, increasing manufacturability, and reducing production costs.

Therein, unification of the system components is ensured through the use of identical panel elements, support elements, corner and intermediate connectors, and standardized fixing elements for locking various system components in the operating position, which simplifies and reduces the cost of manufacturing and use.

The causal relationship between the claimed essential features of the invention and the achieved technical result is as follows.

The claimed rapid deployment modular system, which in the combination of its features is configured to fix vertically installed support elements in the operating position by forming a detachable connection and to enable locking in the operating position of at least two adjacent horizontally installed longitudinal frame elements, which also include means for installing horizontal support elements for forming a floor and/or ceiling or roof, which are arranged horizontally in the operating position and, together with the panel elements through which they are passed, form the floor and/or ceiling or roof, respectively; therein, the lower and upper longitudinal frame elements installed horizontally are formed along the perimeter with four sides defining a polygon, and the means for connecting one panel element to another are provided on at least two lateral sides of the panel elements along the length of these sides, enabling interconnection of the panel elements with each other, enabling users to independently carry out the construction of a complete structure (a building for special purposes, a residential house, or other structures) quickly and easily without special training or qualification, including ceilings and/or roofs and floors, with fixation of support elements in the operating position together with panel elements mounted thereon in the upper and lower longitudinal frame elements having a rigid box-shaped profile in the form of a quadrilateral, thereby enabling the erection of structures of various purposes with increased rigidity, stability, and reliability.

The combination of essential features of the claimed system enables unification of system components and ensures reduced manufacturing and usage costs of the system, while enabling its use by a wide range of users without the use of heavy machinery or special knowledge and qualifications for constructing buildings, while ensuring the possibility of extension, enlargement, reconfiguration, disassembly, and redeployment (erection) at another location.

Therein, the implementation of the claimed system with horizontally installed support elements on the longitudinal frame elements together with panel elements forming the floor and ceiling (roof) provides increased rigidity and stability of the entire structure, as well as creates an isolated structure with reliable contact and connection of its components, thereby further improving stability, durability, and functional performance.

Furthermore, the implementation of the means for connecting one panel element to another on at least two lateral sides of the panel elements along the length of these sides, enabling interconnection of the panel elements with each other, ensures simplification of the structure and reliable connection and abutment of the interconnected panel elements, which also increases the stability and reliability of the claimed structure. Therein, such implementation of the coupling means ensures simplification and acceleration of construction of structures.

Due to the fact that the support element, when installed vertically, comprises slots at its lower end portion for the passage of a lower rod, which is contained in or installed in the lower longitudinal frame element, and for fixing the support element in the operating position by partial rotation of the support element about its longitudinal axis, simplification of the structure and its fixation is achieved, enabling accelerated and simplified assembly of the system and the creation of a structure with increased stability, rigidity, and reliability.

Furthermore, due to the fact that the upper and lower longitudinal frame elements are formed with four sides in the shape of a polygon along the perimeter in the sections not containing openings and apertures, respectively, the resulting closed contour of the longitudinal frame elements provides increased rigidity of the frame structure and, consequently, of the entire system, enables fixation of support elements therein, installation of the roof and floor, and simplification and acceleration of the construction of fully ready-to-use houses.

The upper longitudinal frame element consisting of two parts and including a lower L-shaped or U-shaped part and an upper L-shaped or U-shaped part, wherein the lower part is provided with means for installing fastening elements that secure the upper and lower L-shaped or U-shaped parts in the operating position, ensure the possibility of securing the support elements installed on the lower L-shaped or U-shaped part together with the panel elements mounted thereon, which together form the ceiling (roof), thereby increasing the strength, stability, and reliability of the resulting structure.

Due to the fact that the support elements are made in the form of a tube with a circular cross-section, it becomes possible to implement the claimed connection of the support elements with longitudinal frame elements, corner and intermediate connectors, and to perform fixation by rotation, which simplifies and accelerates assembly of the structure and improves its reliability and stability.

Reliable connection and abutment of panel elements to each other, which increases structural stability, is ensured while simplifying the design of the panel element itself in an embodiment where the means for connecting panel elements to each other are formed as protrusions along the perimeter of the panel elements and may have a thickness equal to half the thickness of the panel element, or another thickness depending on project requirements, while the panel elements are configured to allow either of their two working surfaces to face outward, and in an alternative embodiment, the means for connecting panel elements to each other are formed as recesses on one side or sides, for example in the form of an irregular trapezoid, and corresponding protrusions on the opposite side or sides; this ensures reliable connection and abutment of the panel elements to each other, which increases the stability of the construction while simplifying the construction of the panel element itself. Furthermore, the formation of thermal bridges prevents tight contact between adjacent panel elements in areas that have an exposed surface of polyurethane foam (PUF) or another panel filler material.

The system includes corner connectors that connect longitudinal frame elements at an angle, with support elements arranged and fixed therein, and with locking in the operating position of at least two adjacent horizontally installed longitudinal frame elements, as well as includes intermediate connectors for joining longitudinal frame elements along their length, and the presence in the structure of X-shaped connectors and I-shaped connectors for converting an L-shaped connector of the claimed system into a T-shaped connector, and a T-shaped connector into an X-shaped connector, thereby providing increased structural rigidity, strength, and the possibility of forming structures of various configurations, as well as reconfiguration by changing the configuration, dimensions, and number of rooms of the structure (building).

Due to the fact that the system includes corner elements which, in the operating position, are threaded onto the support elements and installed on the corner connectors with connection to the panel elements, as well as the fact that the system includes intermediate elements which, in the operating position, are threaded onto the support elements and installed on intermediate connectors with connection to the panel elements and/or window units and/or door units, the use of identical panel elements is ensured; this provides unification of system components, simplifies its manufacturing and use, and enables the creation of structures of various configurations with simplified and accelerated construction.

Due to the fact that the system includes at least one door unit configured to be connectable to panel elements and/or to intermediate elements installed on intermediate connectors, and comprising at least one opening for the passage of a support element, simplification and acceleration of assembly of the structure are ensured.

Due to the fact that the system includes at least one window unit, in an embodiment configured to be connectable to panel elements and/or to intermediate elements installed on intermediate connectors, and comprising openings for the passage of support elements, the possibility of using the same support elements is ensured both for installing panel elements to form building walls and for installing windows, thereby simplifying and accelerating construction and enabling different building configurations, as well as replacement of panel elements with window units and vice versa.

The claimed system is provided with fastening and fixing means for the elements operating on the same principle, which also simplifies and accelerates the assembly of the system, ensures unification of system components, and simplifies and reduces the cost of their production.

The further essence of the invention is explained in the description provided below as a non-limiting embodiment, with reference to the drawings, in which:

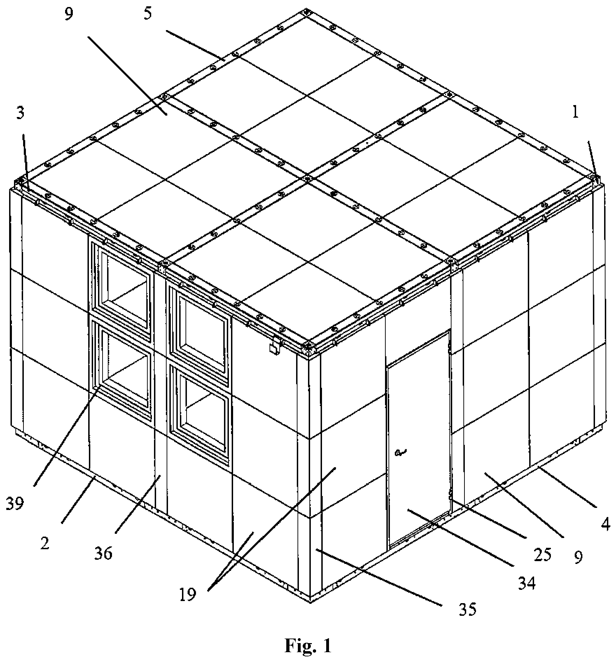

Figure 1 - General view of the claimed rapid deployment modular system in an assembled state in one embodiment.

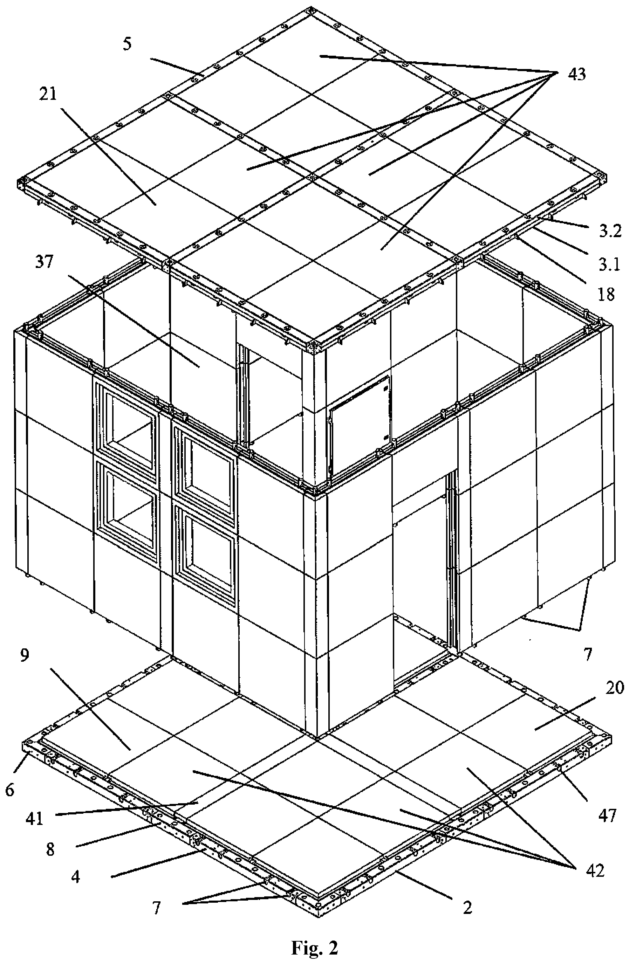

Figure 2 - General view of the claimed rapid deployment modular system in a partially disassembled state in one embodiment;

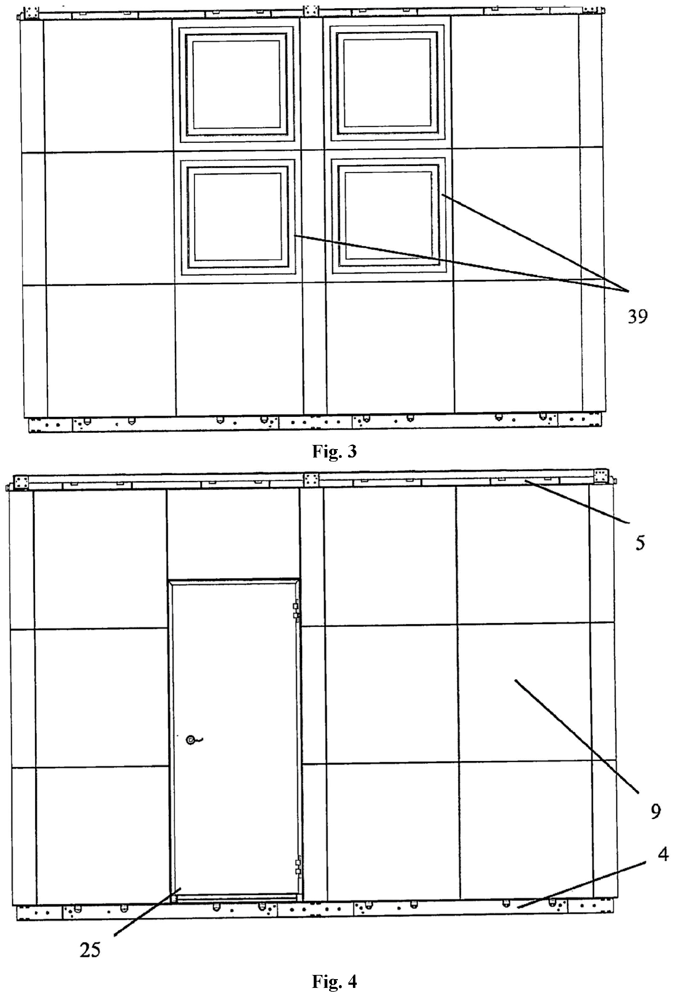

Figure 3 - Side view of the claimed rapid deployment modular system in an assembled state in one embodiment;
Figure 4 - View from the opposite side of the claimed rapid deployment modular system in an assembled state in one embodiment.

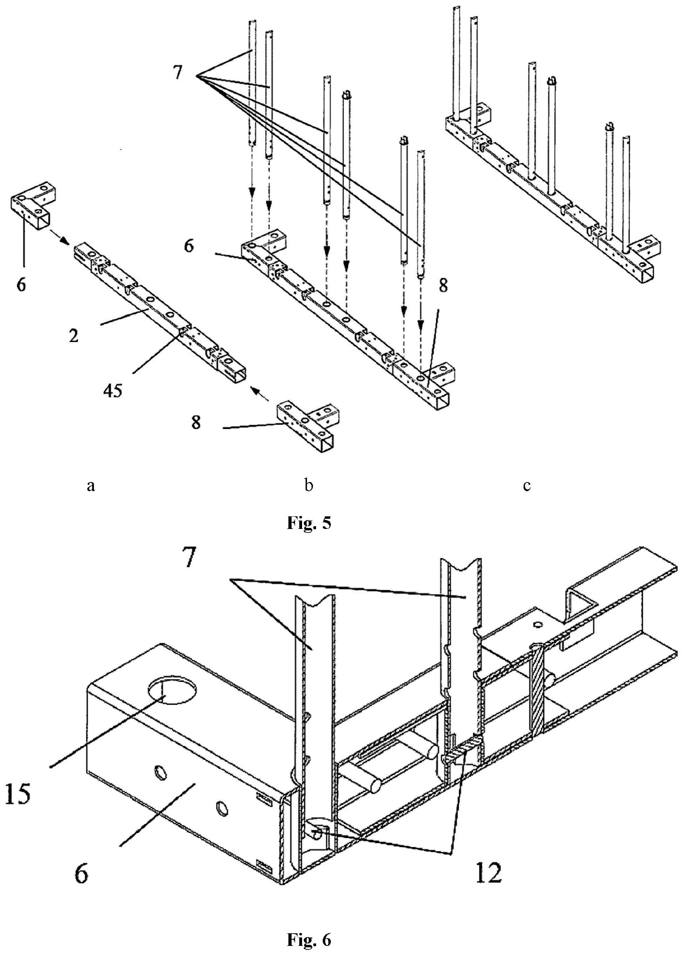

Figure 5 (a, b, c) - Illustration of structural elements of the rapid deployment modular system in the sequence of their connection in one embodiment;
Figure 6 - Cross-sectional view of the connection between a corner connector and an elongated frame element.

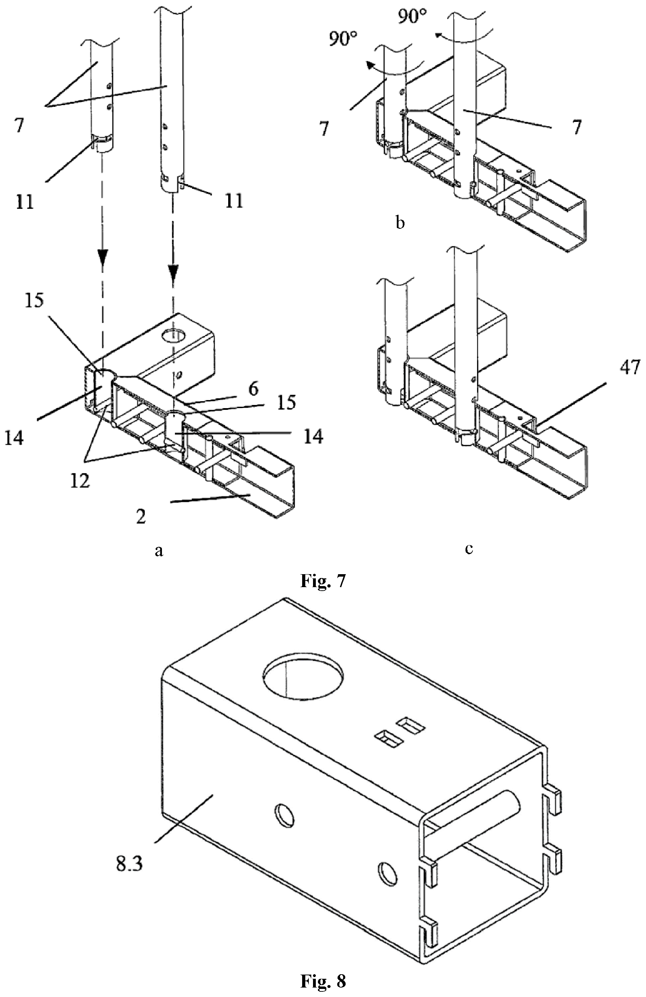

Figure 7 (a, b) - Illustration showing the sequence of installation of a support element in a corner connector;
Figure 8 (a, b) - General view of an I-shaped longitudinal connector in one embodiment.

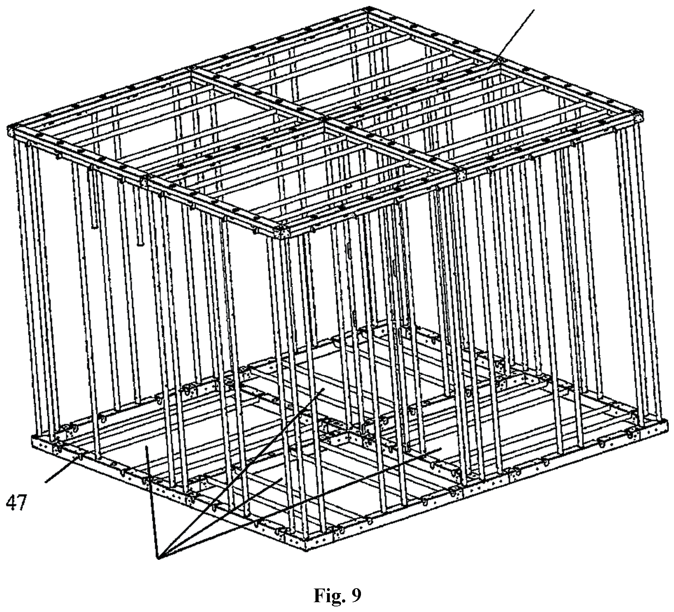

Figure 9 - General view of the frame structure with panel elements not shown for clarity.

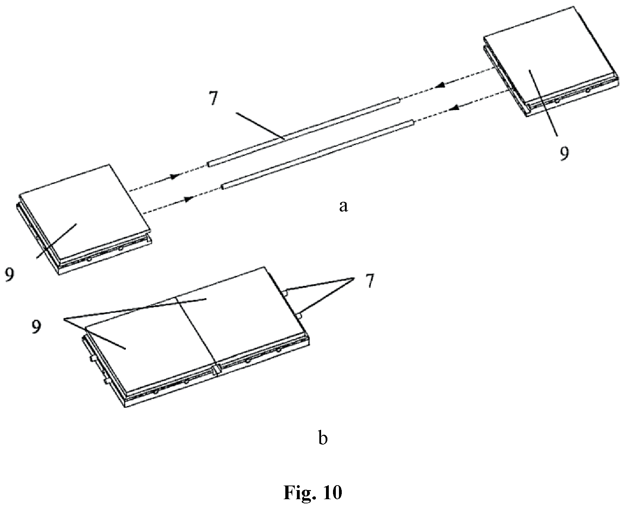

Figure 10 (a, b) - Illustration of the sequence of connections of floor panel elements with support elements;

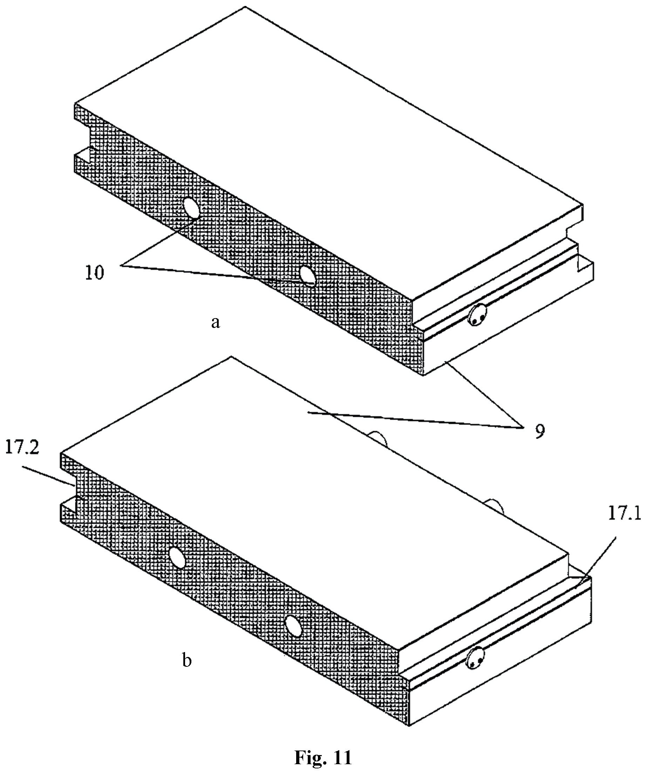

Figure 11 (a, b) - Schematic cross-sectional view of floor panel elements without support elements passing through them and with support elements in one embodiment.

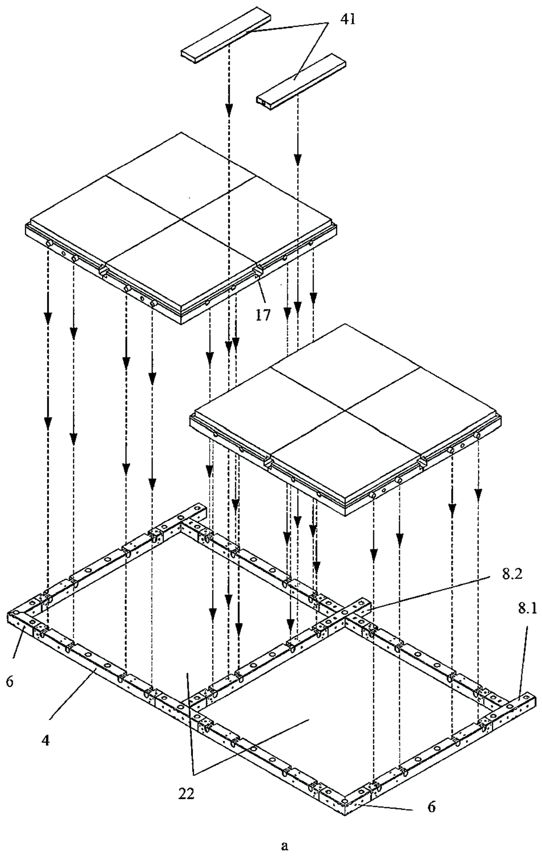

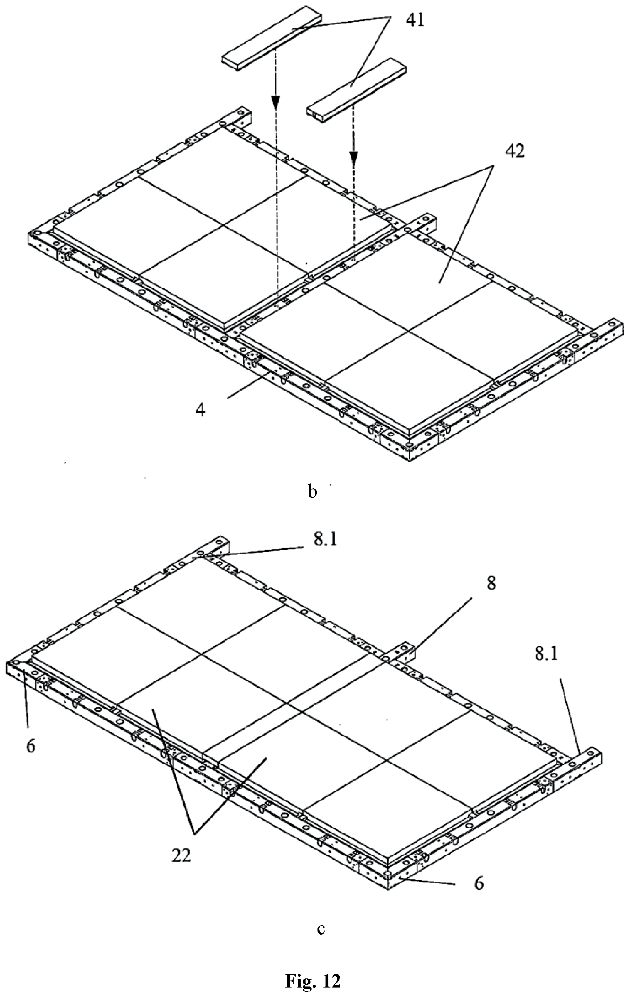

Figure 12 (a, b, c) - Illustration of the sequence of connections of the floor with the lower frame of the structure in one embodiment;

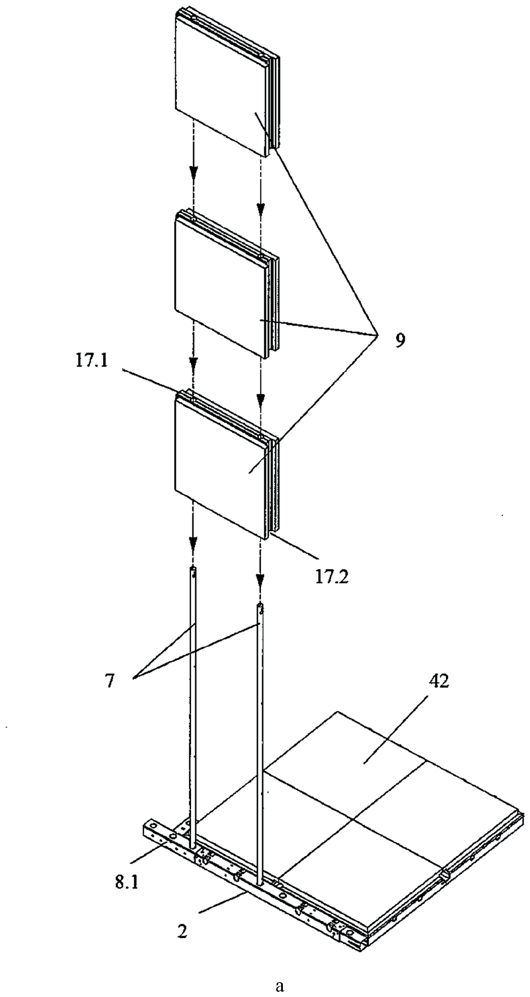

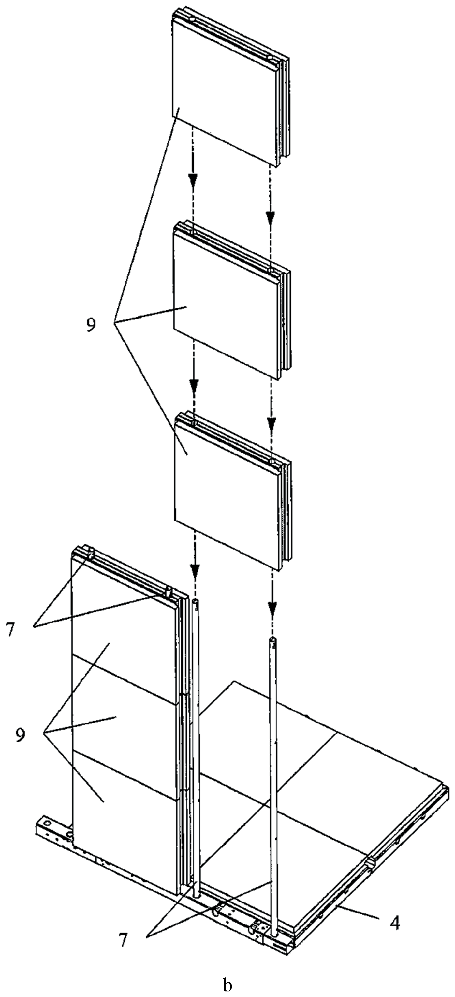

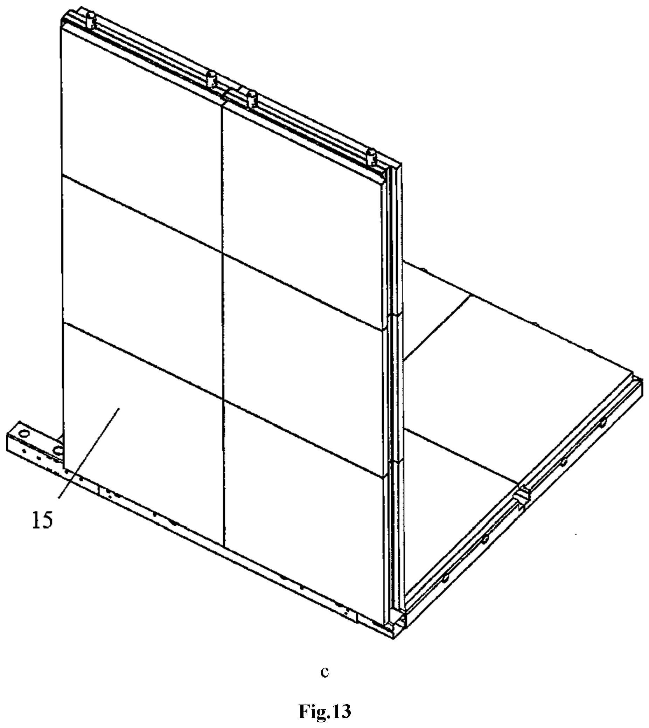

Figure 13 (a, b, c) - Illustration of the sequence of connections of a building wall assembled from panel elements and support elements in one embodiment.

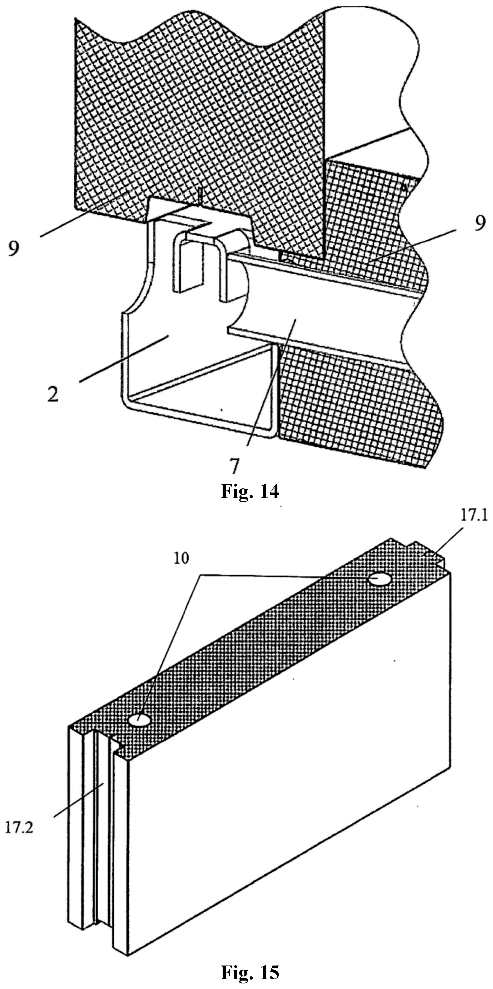

Figure 14 - Cross-sectional view of the floor and wall assembled on the lower frame of the structure in one embodiment;
Figure 15 - Illustration of an embodiment of a panel element;

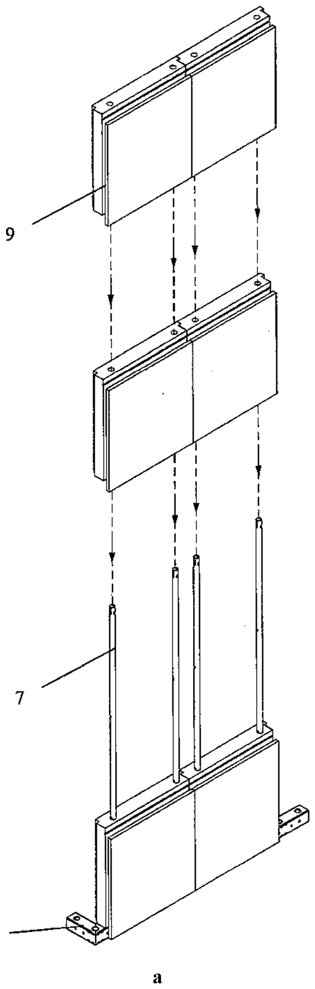

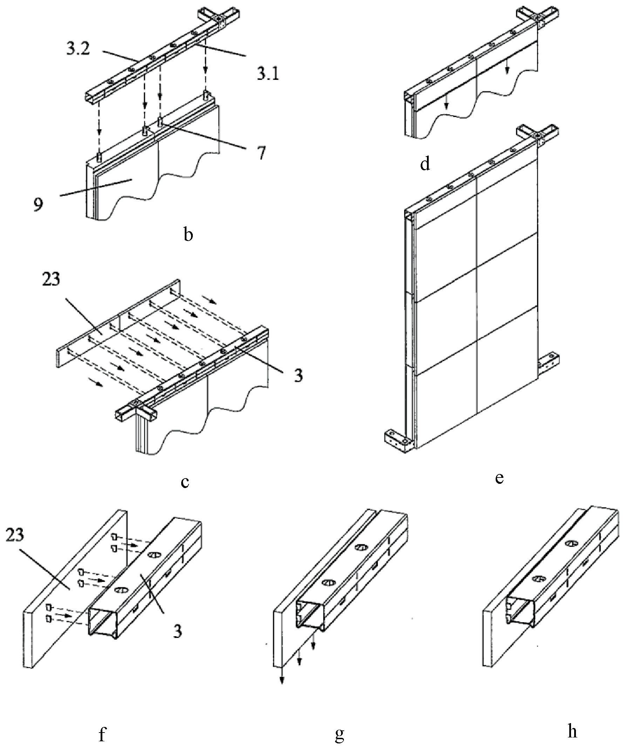

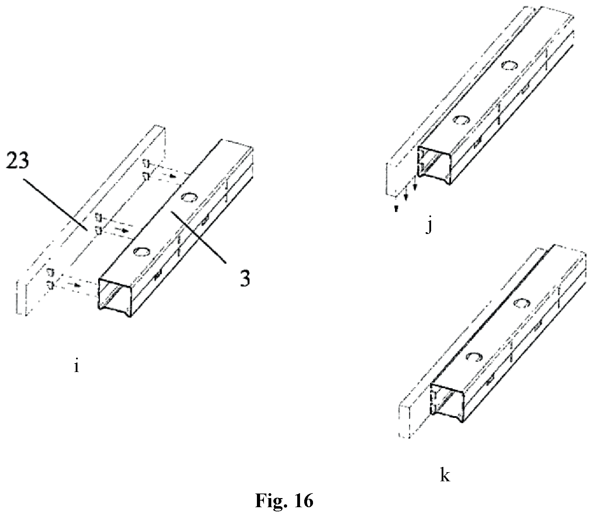

Figure 16 (a, b, c, d, e, f, g, h, i, j, k) - Illustration of the connection of elements of the claimed system in one embodiment.

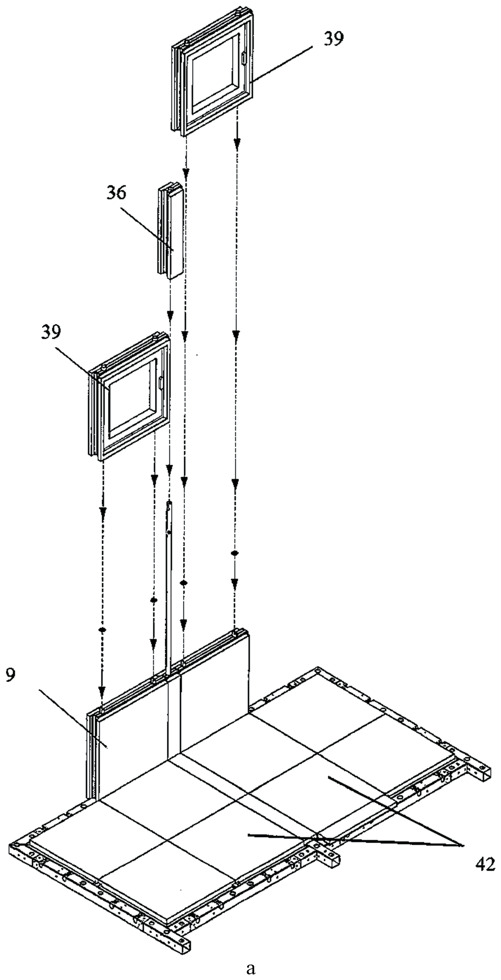

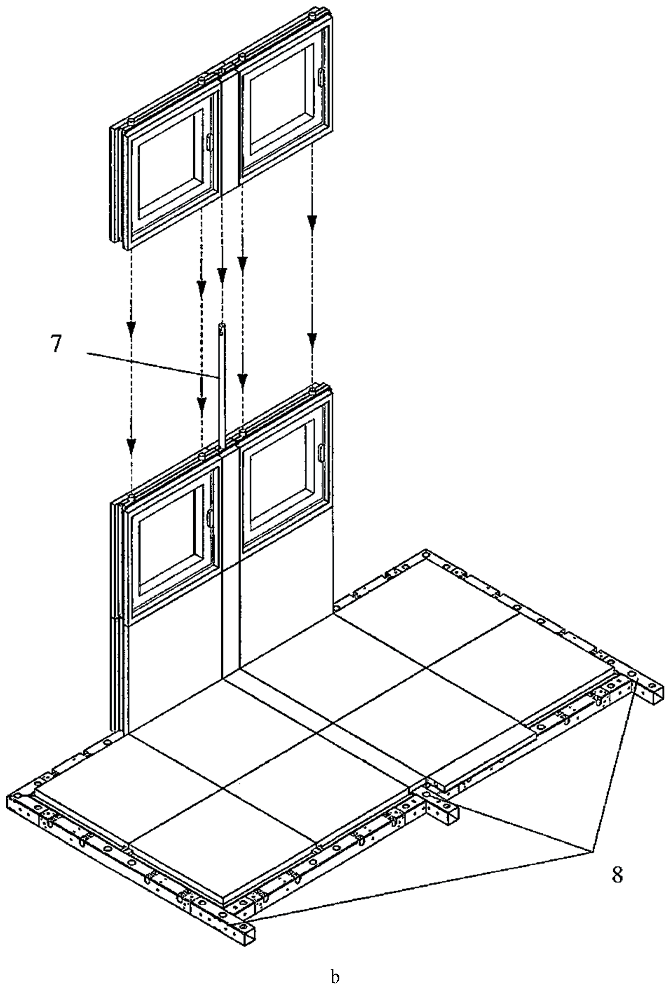

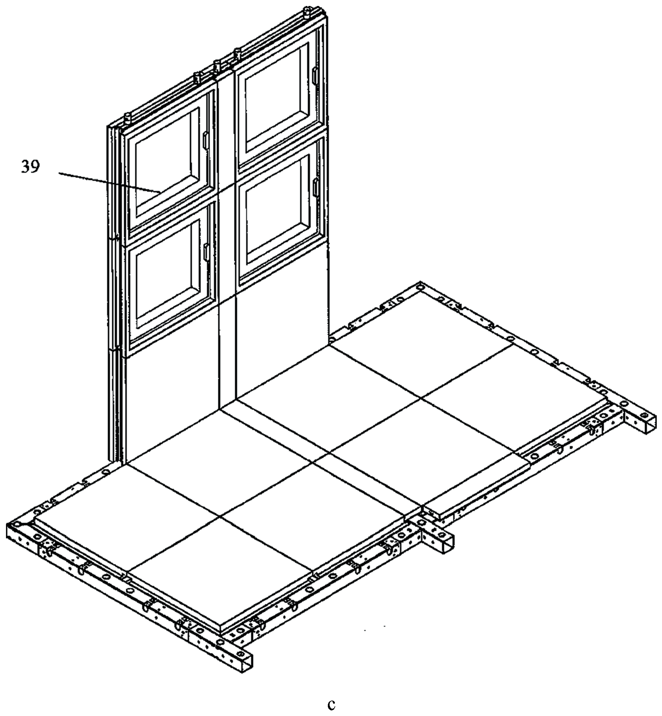

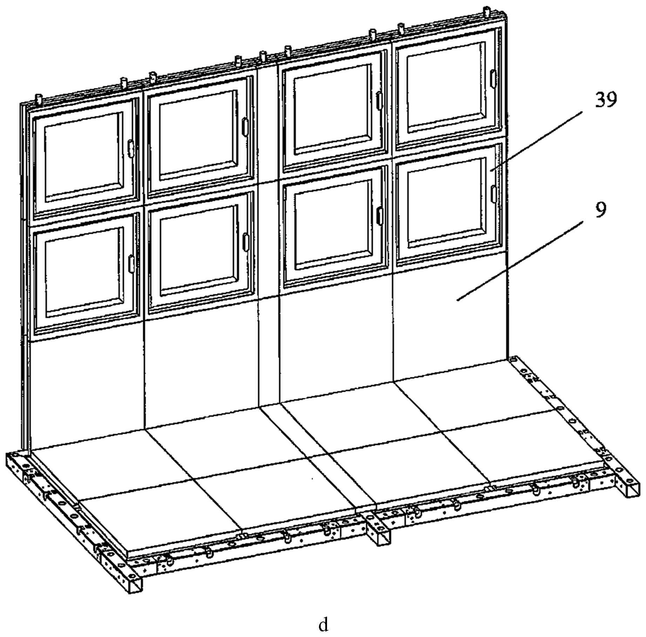

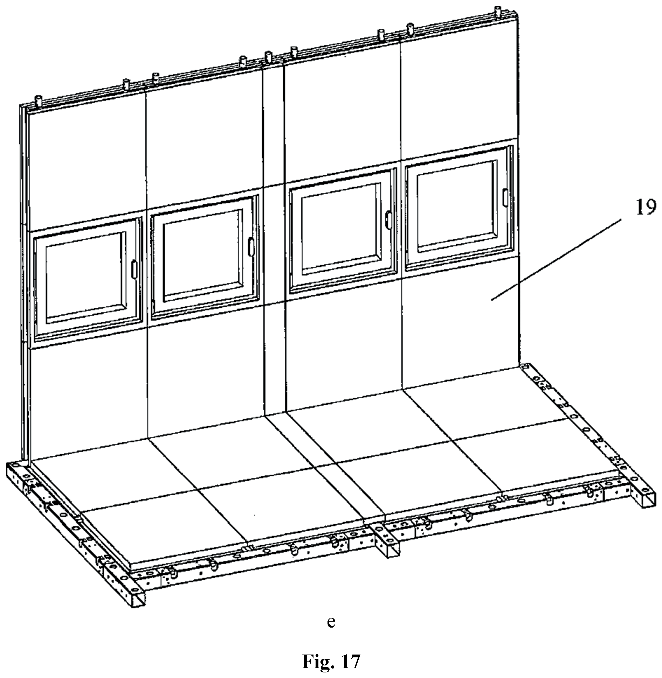

Figure 17 (a, b, c, d, e) - Illustration of the sequence of installation of window units in one embodiment;

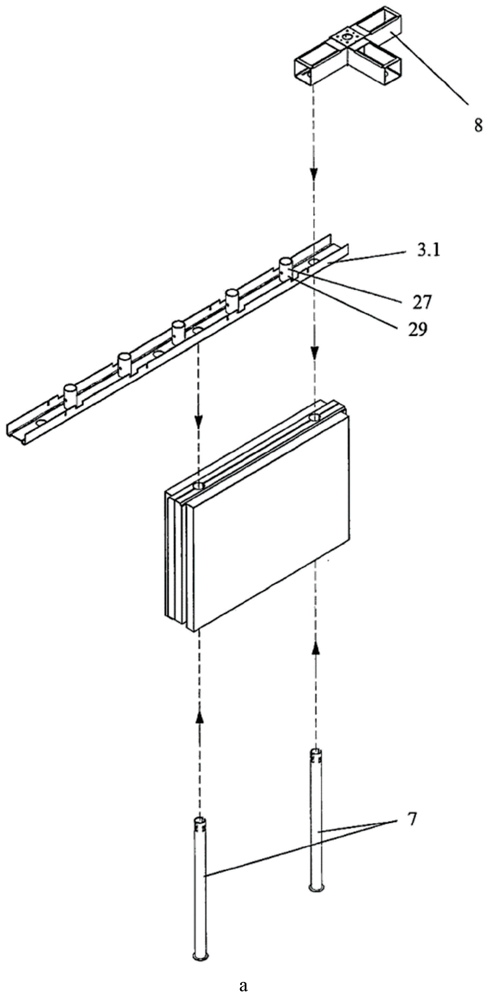

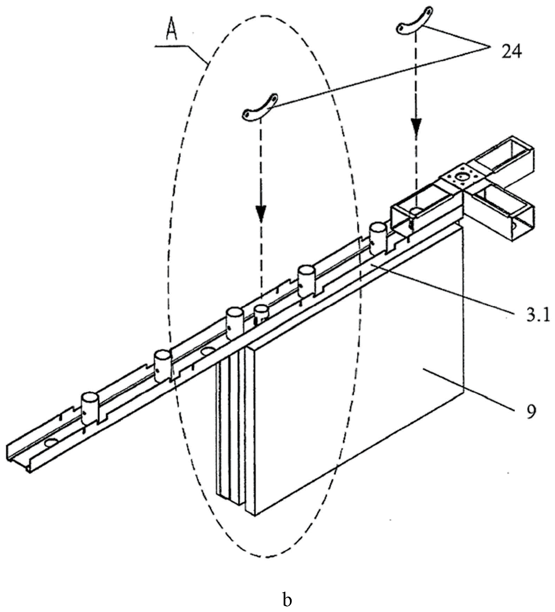

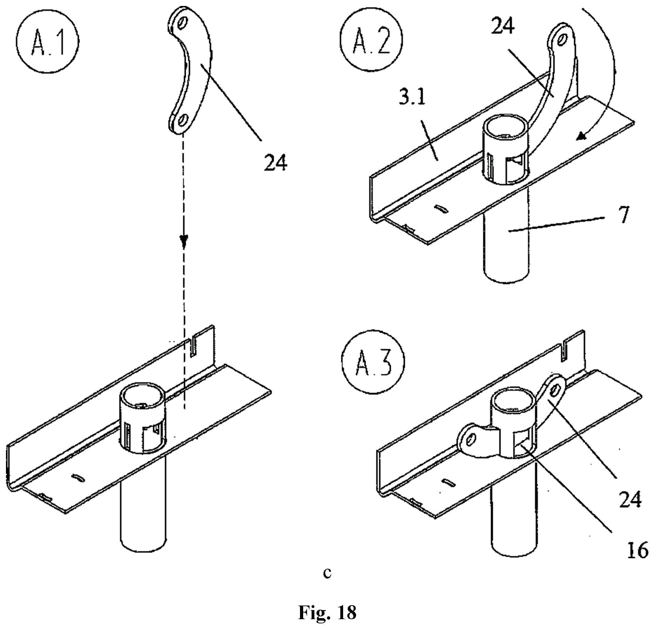

Figure 18 (a, b, c) - Illustration of a fragment of the upper frame of the structure during assembly and fixation in one embodiment;

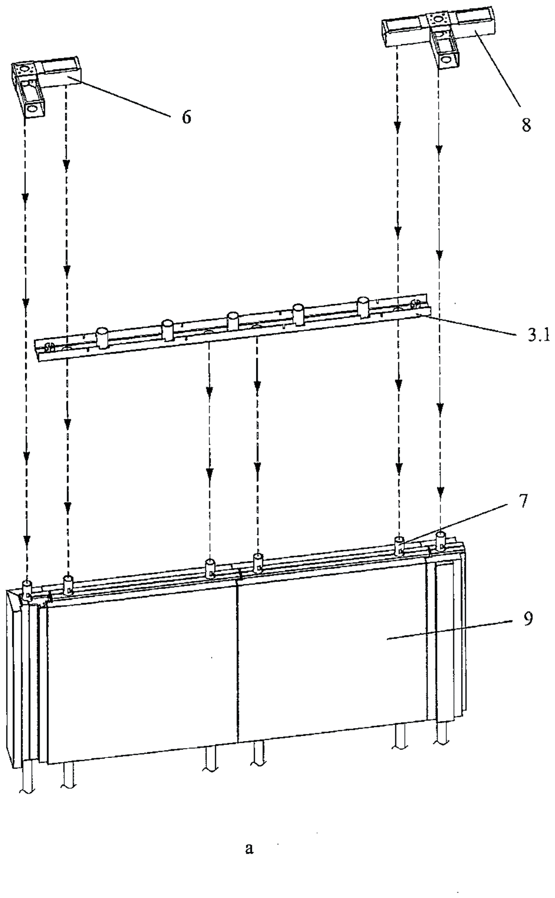

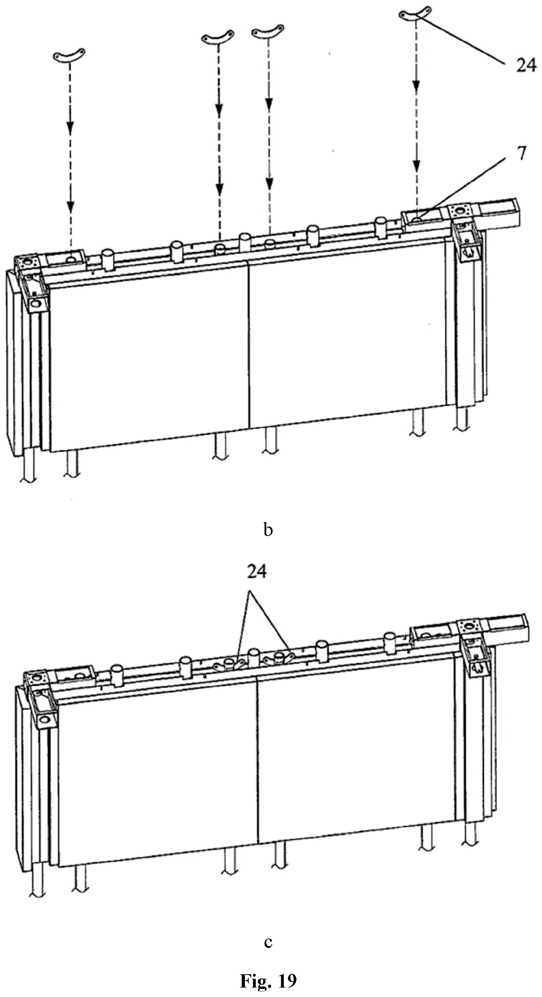

Figure 19 (a, b, c) - Illustration of a fragment of the upper frame of the structure during assembly and fixation in one embodiment of the claimed system.

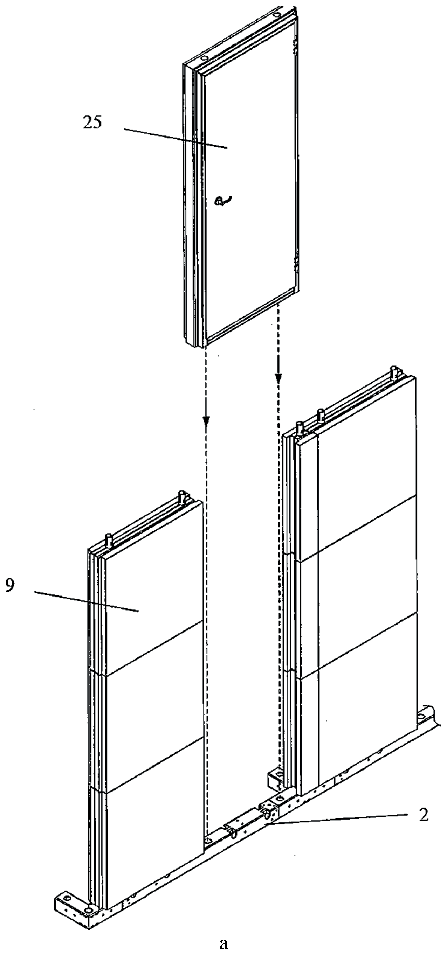

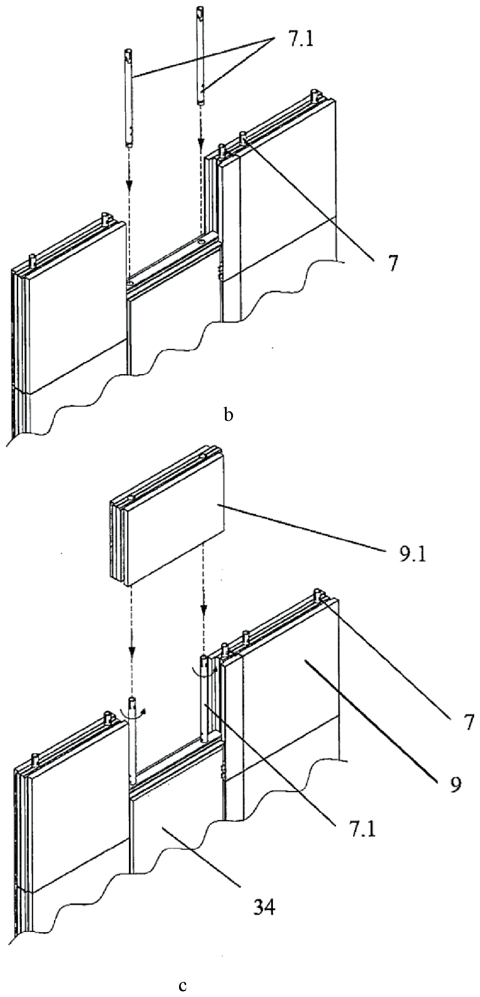

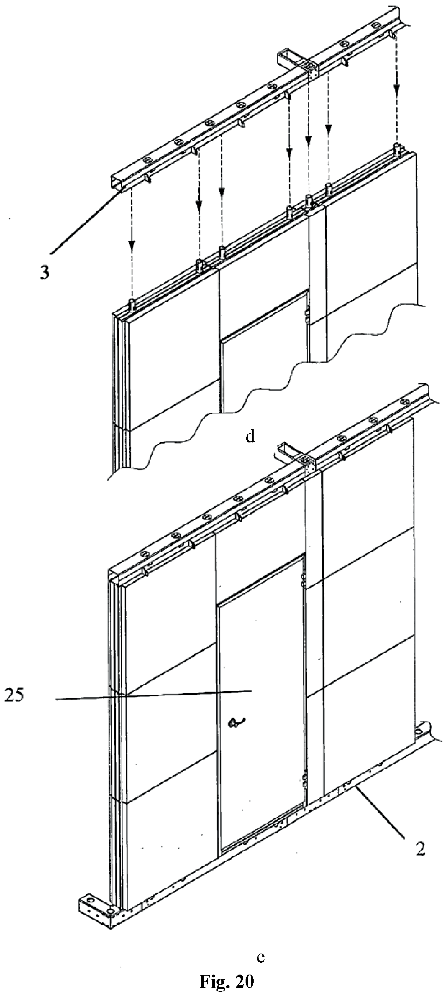

Figure 20 (a, b, c, d, e) - Illustration of the sequence of installation of a door unit in one embodiment;

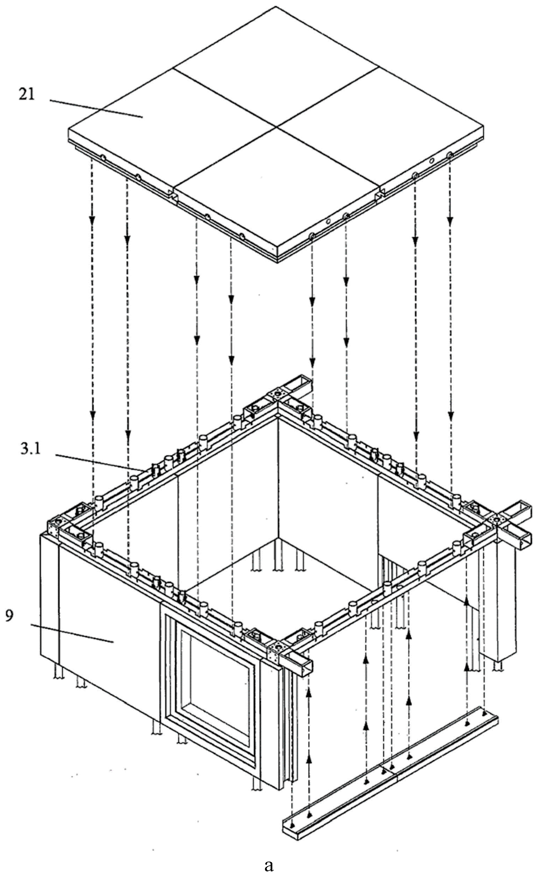

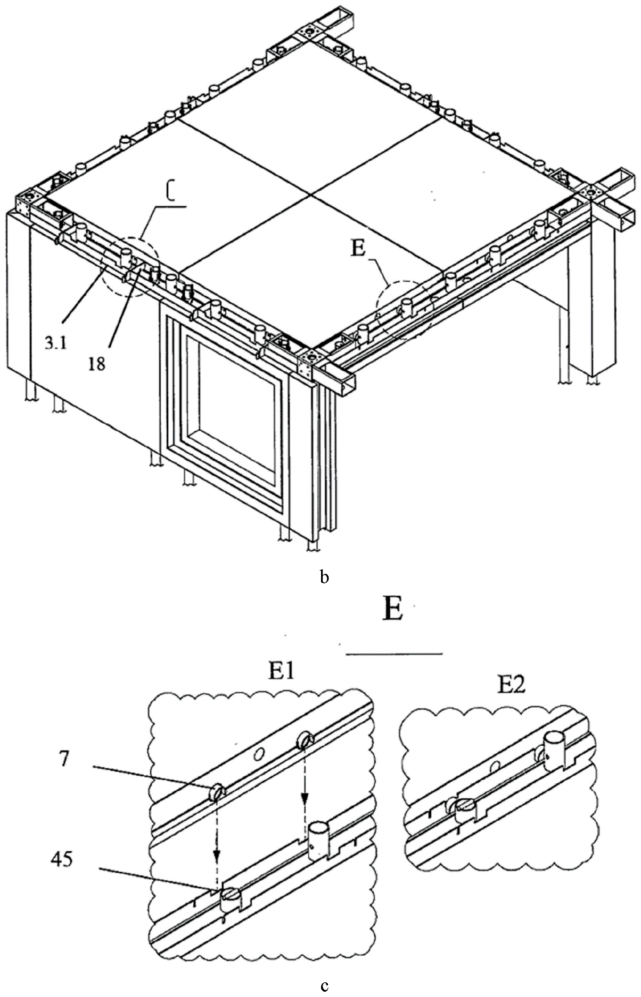

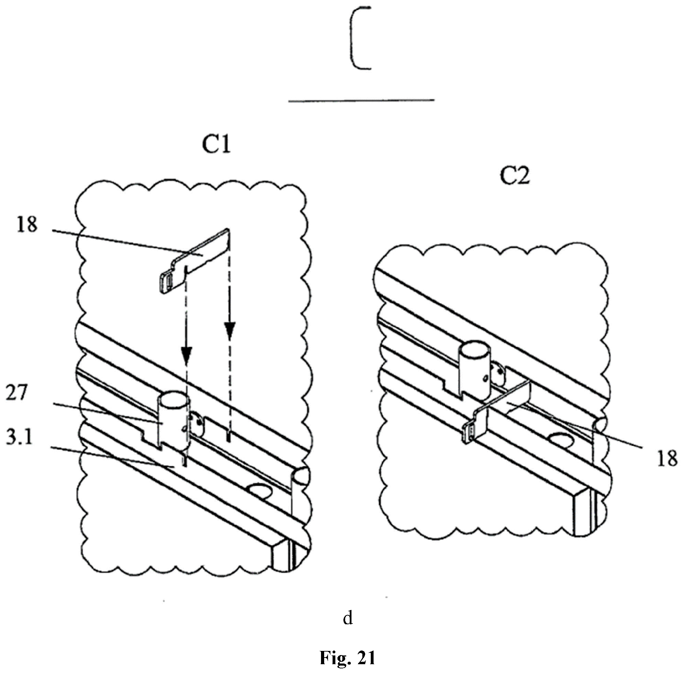

Figure 21 (a, b, c, d) - Illustration of the sequence of connections of the ceiling or roof with the upper frame of the structure in one embodiment of the claimed system;

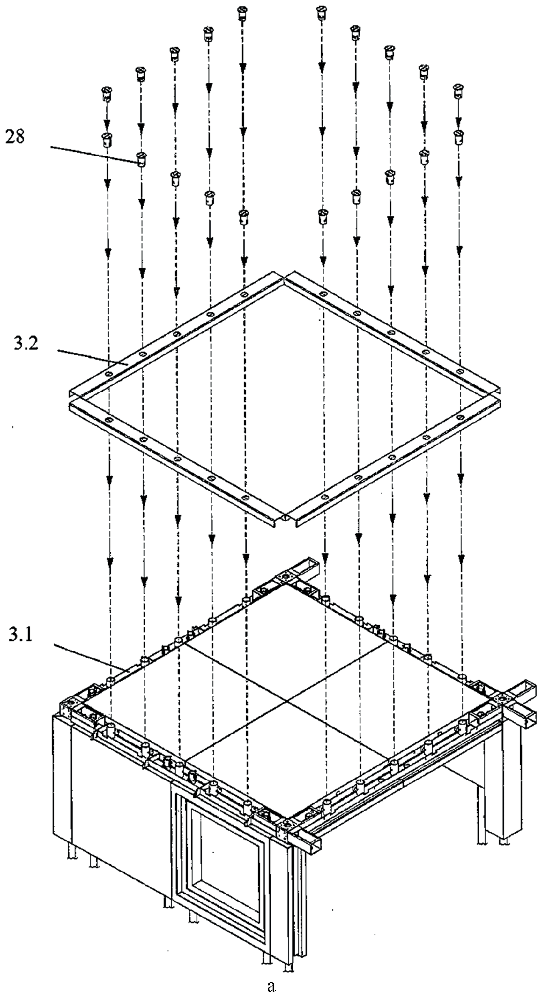

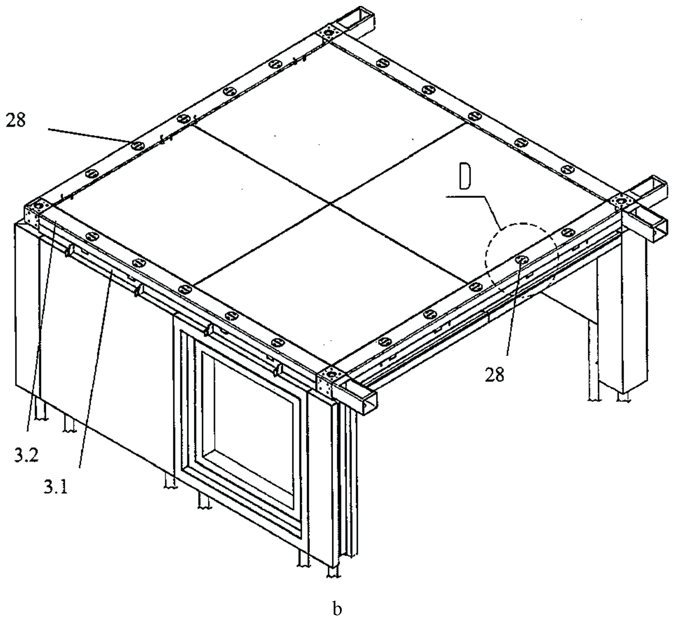

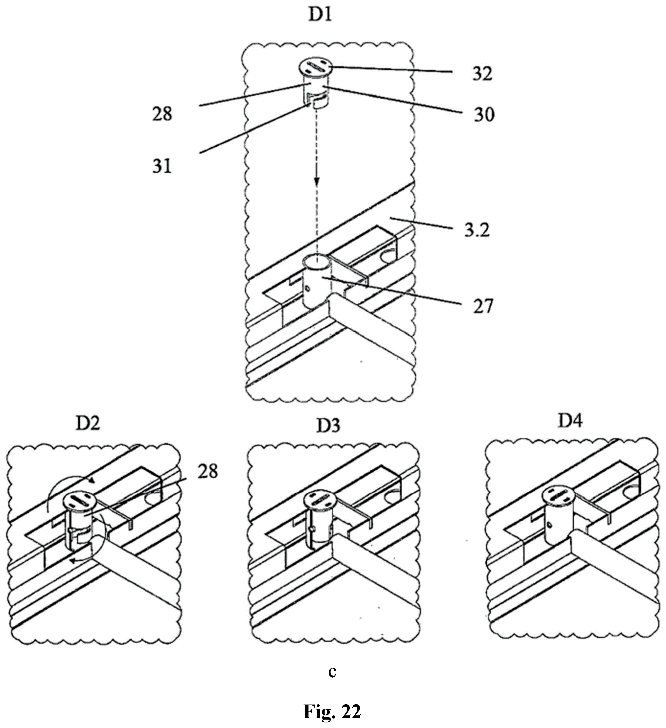

Figure 22 (a, b, c) - Illustration of the sequence of installation and fixation of the upper part of the upper frame of the structure in one embodiment.

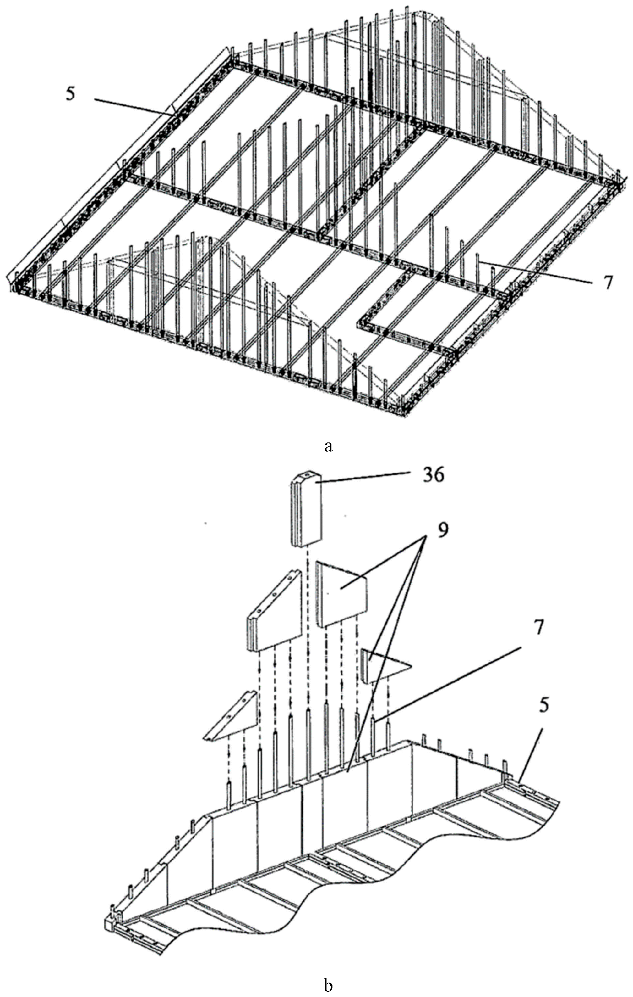

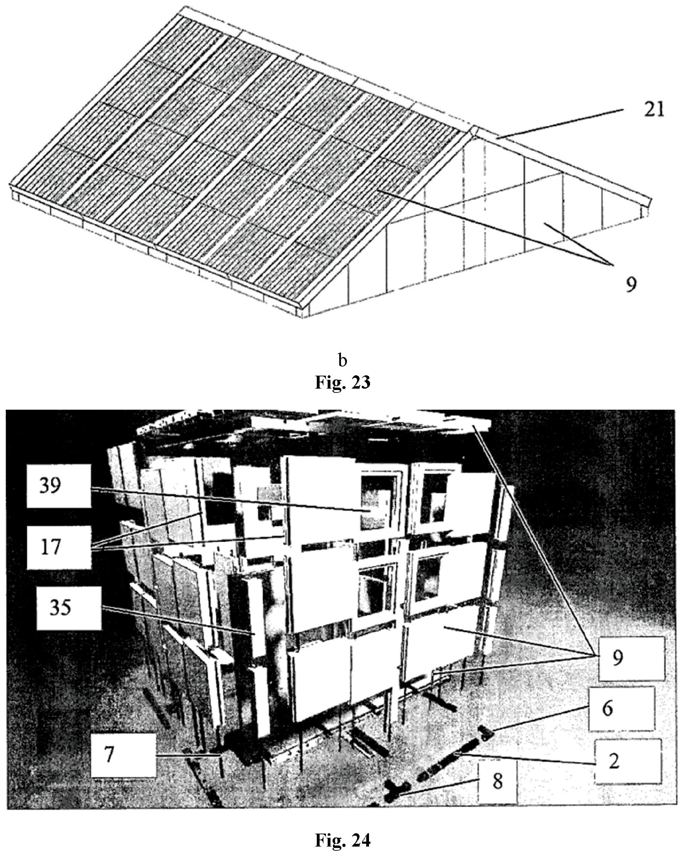

Figure 23 (a, b, c) - Illustration of the roof in the sequence of installation of roof elements in one embodiment of the claimed system.

In addition to the above-mentioned drawings, the essence of the claimed invention is illustrated by the following figures:
Figure 24 - General view of the claimed rapid deployment modular system in a partially disassembled state in one embodiment;

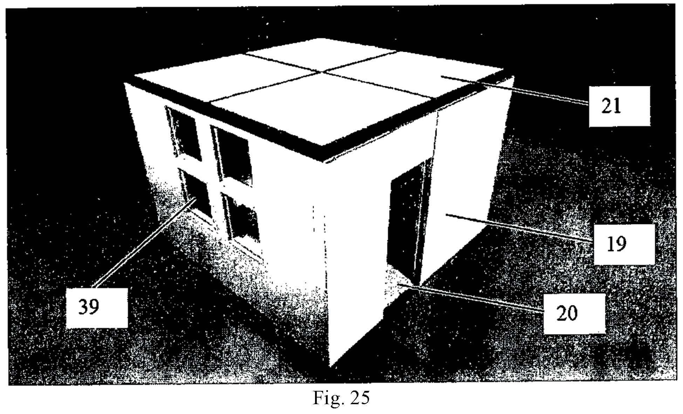

Figure 25 - General view of the claimed rapid deployment modular system in an assembled state in one embodiment.

The proposed rapid deployment modular system, in a non-limiting embodiment, comprises a frame 1 including horizontally installed lower 2 and upper longitudinal frame elements 3, which form, in various embodiments together with corner connectors 6 and intermediate connectors 8, the lower 4 and upper 5 frame structures respectively, as well as vertically installed support elements 7 arranged in the horizontally installed lower 2 and upper 3 longitudinal frame elements. The system further includes panel elements 9 with openings 10 for the passage of support elements 7 and means 17 for connecting one panel 9 to another, forming each wall 19 of the resulting building. Therein, the claimed system is configured to enable fixation of vertically installed support elements 7 in an operating position by forming a detachable connection and to enable locking in the operating position of at least two adjacent horizontally installed longitudinal frame elements 2, 3; this is achieved by the structural implementation of the system components, particularly, in one possible embodiment, the support elements 7 are provided with slots 11 for receiving a rod 12, which is contained in or can be installed in the lower longitudinal frame element 2 or in the corner L-shaped 6 or intermediate 8 connectors that connect the longitudinal frame elements 2, 3 and ensure fixation of the support element 7 in the operating position within a socket 14 with an opening 15 located in the lower longitudinal frame element 2 or in the corner L-shaped 6 or intermediate connector 8, by rotating the vertically installed support element 7 by 90° about its longitudinal axis, such that the rod 12 enters the slot in the form of a groove 16.

The panel elements 9 may be provided with appropriate coatings: ceiling panel elements may be made with an internal finish and an external coating meeting project requirements and other requirements for resistance to various factors, wear resistance, and other coating requirements; floor panel elements may be provided with an internal coating such as laminate or another material, and ceiling panel elements may be provided with an internal finish or coating and an external coating meeting the requirements, thereby forming finished walls, floor, and ceiling (roof in an embodiment) that do not require additional processing or finishing.

Therein, the system includes, in addition to corner L-shaped connectors 6 connecting the longitudinal frame elements 3 at a 90° angle with positioning and fixation of the support elements 7 therein by rotation about the axis of the support element 7, thereby locking in the operating position at least two adjacent horizontally installed longitudinal frame elements 3; intermediate T-shaped connectors 8.1 for connecting longitudinal frame elements 3 along their length, with positioning and fixation of support elements 7 therein by rotation about their vertical axis, thereby locking in the operating position at least three adjacent horizontally installed longitudinal frame elements 3.

The system also includes intermediate X-shaped connectors 8.2 for connecting longitudinal frame elements 3 along their length, with positioning and fixation of support elements 7 therein by rotation about their vertical axis, thereby locking in the operating position at least four adjacent horizontally installed longitudinal frame elements 3.

The system further includes intermediate I-shaped connectors 8.3 for converting the L-shaped connector 6 into a T-shaped connector 8.1, and the T-shaped connector 8.1 into an X-shaped connector 8.2 by attaching through corresponding openings in the side surface of the L-shaped connectors 6 and T-shaped connectors 8.1, thereby providing an additional opening for connecting longitudinal frame elements 3 along their length, with positioning and fixation of support elements 7 therein by rotation about the axis of the support element 7, thus enabling installation of additional space to the existing system without modification of the elements of the existing system, for example, an additional room or terrace.

The longitudinal frame elements 3 comprise means 45 in the form of recesses, indentations, or openings for installing horizontal support elements 7 to form a floor 20 and/or ceiling 21 or roof. The longitudinal frame elements 3 are arranged horizontally in the operating position and, together with the panel elements 9 through which they pass, they form the floor 20 and/or ceiling 21 or roof, respectively, wherein the horizontally installed lower 2 and upper longitudinal frame elements 3 are formed along the perimeter with four sides defining a polygon, while the means 17 for connecting one panel element 9 to another are provided on at least two lateral sides of the panel elements 9 along the length of these sides, enabling interconnection of the panel elements with each other.

The lower longitudinal frame elements comprise recesses 47 for installing horizontal support elements 7 for forming a floor.

In one embodiment, the panel element 9 may be provided with a protrusion 17.1 on one side and, on the opposite side, a corresponding recess 17.2 matching the protrusion 17.1. In another embodiment, the panel element 9 may be provided with protrusions on all sides, enabling the panel elements 9 to be interconnected by alternately flipping them.

The support elements 7, when installed vertically and, in a preferred embodiment, when installed horizontally, have different end portions. Since the horizontally installed support elements 7 are placed in recesses 47, they are provided with cutouts or grooves for fixation by the longitudinal frame elements.

In an alternative embodiment, the protrusion 17.1 and recess 17.2 may have a complex configuration to ensure reliable interconnection of the panel elements 9 and insulation of the resulting ceiling or roof.

In a preferred embodiment, the upper 4 and lower 5 frame structures of the frame 1 are divided into sections 22 by longitudinal frame elements 3 connected at the centre of each frame 4, 5 by an X-shaped connector 8.1, which provides increased rigidity and stability of the claimed structure.

The claimed system may be provided with internal partitions 37 formed by panel elements 9 threaded onto the support elements 7, including an internal door.

The system includes a door unit which, in its lower part, has at least two tube sections-short support elements 7.1 having the same diameter as the support elements 7, which are installed in the operating position vertically in place of two adjacent support elements 7; on both sides, the door unit is fixed by wall panels formed from panel elements 9 having recesses, while in the upper part it includes corresponding sockets or sleeves for fixation by short support elements to the lower side of the upper longitudinal frame element 3.2, with fixation in the operating position according to the same principle as all support elements 7 as well as panel 9.1 with a cutout in the lower part is also installed according to protrusions on the door frame, for fixing the door 34 in the upper part.

The system may include a support element 7.1 of a special length for installation of the door unit 25, installed vertically, which may comprise slots at its upper end portion for the passage of a locking element 24 and fixation of the support element 7 in the operating position. The locking element 24 may be implemented in the form of a plate.

The upper longitudinal frame elements 3 and the lower longitudinal frame elements 2 are formed with a closed contour, preventing the formation of a beam with a free end, as in the closest prior art, which provides increased rigidity and enables the installation and fixation of support elements 7 therein, thereby ensuring a rigid and stable structure of the lower 4 and upper 5 frame structures, and consequently of the entire frame 1.

The upper longitudinal frame element 3 comprises a lower 3.1 L-shaped or, in an alternative embodiment, U-shaped part, and an upper 3.2 L-shaped or U-shaped part, wherein the lower part is provided with means 27 for installing fastening elements 28, which secure, in the operating position, the upper 3.1 and lower 3.2 L-shaped or U-shaped parts. Such a structural solution makes it possible to install horizontally arranged support elements 7 with threaded panel elements on the lower part and to reliably secure them in the operating position.

In one embodiment, the means 27 for receiving fastening elements 28 and the fastening elements 28 have a circular cross-sectional shape of the body 29, 30 respectively, and are provided with slots 31. The fastening element 28 has a flat upper end portion 32 wider than the diameter of its body 30, and is configured to receive the upper rod 12 and to be partially rotatable about the longitudinal axis of the body 30, thereby fixing the upper L-shaped or U-shaped part 3.1 in the operating position.

The vertically installed support elements 7, in a preferred embodiment, are formed as a tube with a circular cross-section and include vertical slots in their upper part, which are located above the openings in the lower part of the upper longitudinal frame elements 3 in the operating position of the support element 7; by inserting a metal plate or other locking means 18 through these slots, all panel elements through which the support element passes are fixed by compression against the lower longitudinal frame element 3 in the vertical direction.

Corner connectors 6, in an L-shaped embodiment, connect two longitudinal frame elements 3 at a 90° angle, with arrangement and fixation therein of supporting elements 7, with locking in the working position of two adjacent horizontally installed longitudinal frame elements 3.

Intermediate connectors 8, in various embodiments, enable connection of 2, 3, and 4 longitudinal frame elements 3 along their length and at an angle, respectively, thereby enabling construction of buildings of different sizes and configurations with different numbers and sizes of rooms.

The system includes wall corner elements 35, which in the working position are threaded onto the supporting elements 7 and installed on the corner connectors 6, with connection to the panel elements 9 by means similar to the connecting means 17 for interconnecting the panel elements 9.

The system also includes wall intermediate elements 36, which in the working position are threaded onto the supporting elements 7 and installed on the intermediate connectors 8, with connection to the panel elements and/or to window units 39 in an embodiment, and/or to a door unit 25, by means similar to the connecting means 17 for interconnecting the panel elements 9.

The system includes at least one door unit configured for connection to the panel elements 9 and/or to the wall intermediate elements 36 installed on the intermediate connectors 8, and comprising at least one opening for passage of the supporting element 7.

The system may include at least one window unit 25 configured for connection to the panel elements 9 and/or to the wall intermediate elements 36 installed on the intermediate connectors 8, and comprising openings for passage therethrough of the supporting elements 7.

The system may also include covers 41 for use as plugs for the floor 20 and/or ceiling 21 according to the design, and for installation between adjacent floor 42 or ceiling 43 sections mounted on the frame.

The system may further include strips 23 installed on the upper frame 5 in various embodiments.

The components of the modular system may be made of any materials capable of reproducing its structure and ensuring rigidity, strength, and stability. The system components may be manufactured by pressing, including from waste materials, extrusion, injection moulding, or other technologies depending on the properties of the selected materials.

The claimed technical solution is used as follows.

The proposed modular system allows the assembly of a structure on any territory, with or without a foundation.

In one embodiment, the modular system may be installed on supports with bases.

The proposed modular system enables the construction of multiple storeys; if, instead of fastening elements 28, supporting elements 7 are inserted, the roof structure forms the ceiling 21 of the second floor, and assembly is continued with wall elements 36, corner elements 6, and intermediate elements 8, extending the required area of the building, with subsequent installation of the roof 21, and so on.

In one embodiment, the lower frame 4 of the frame 1 is assembled, horizontal supporting elements 3 are installed and fixed thereon, on which floor panel elements 9 are threaded, vertical supporting elements 7 are installed and fixed, on which panel elements 9 are threaded, thereby forming the building walls 19. In the presence of corner connectors 6 and intermediate connectors 8, wall corner elements 35 and wall intermediate elements 36 are threaded onto the supporting elements 3 installed and fixed therein by rotation, thereby forming integrally connected walls 19 of the structure.

The prefabricated steel frame structure 1 in one embodiment forms a platform for constructing wall structures 19 and a floor/ceiling structure 21, including a ceiling and/or roof. Vertical supporting elements 7 (posts), inserted into the openings of the frames 4, 5, also perform the function of mechanically locking adjacent elongated frame elements 3.

When forming the corresponding walls 19, window units 39 and door units 25 are installed at locations specified in the building design. When using panel elements 9, internal partitions of the structure may be created.

Next, the lower parts 3.1 of the upper longitudinal frame elements 3 are installed, forming the lower portion of the upper frame 5; a ceiling and/or roof or roofing 21, in embodiments, is installed thereon, with the corresponding supporting elements 7 passing through it and being fixed by means of locking devices 24. Upper L-, T-, X- and/or I-shaped connectors are installed and fixed, after which the upper parts 3.2 of the upper longitudinal frame elements 3 are installed, forming the upper frame 5.

In embodiments, the roof 21 may be flat, gable (two-pitched), or multi-pitched.

When using the claimed system, a required architectural form is created. The size and shape of the object may vary widely and, if necessary, be asymmetric, with the possibility of extension in any horizontal direction of an already existing structure by means of I-shaped connectors 8.3.

The geometry of the panel elements 9 allows for achieving watertightness. Any filler material may be used, provided it has properties enabling dense penetration into the structure of the outer and inner layers of the panels in order to bond and reproduce the required panel shape. As a filling material for the panel elements 9, polyurethane foams (PUF) may be used depending on the formulation and panel thickness selected by the customer, whereby thermal protection down to -50°C may be provided.

The system may include a protective roof covering 21 made of rubberized fabric or various embodiments of waterproof fabrics and other materials capable of protecting the roof from precipitation and preventing foreign substances from entering the interior of the building, wherein such covering may include side allowances for protection against precipitation and may be tensioned along the perimeter by polymer straps, ropes, or cables, or having sewn-in magnetic strips, which are attached to the steel surface of the frame (5) or the frame structure, or may be fixed by any other means reliably retaining the protective material on the roof.

The roof structure may further comprise additional covering elements in the form of panels or plates, or any elements which, due to their geometry, interlock in a manner preventing the ingress of water or any substances into the interior of the building.

The roof structure may be flat, triangular, trapezoidal, or of any complex shape, and may be assembled using roof fastening elements 21 with additional supporting elements 7 of different lengths inserted in place of fastening elements 28, and having a fastening system corresponding to the required roof structure according to the design.

The resulting building may be disassembled as necessary, transported or relocated to a new deployment site, and reassembled with repeated use of its components.

The claimed system comprises unified fastening elements, which simplifies assembly and does not require highly skilled or high-cost operations.

Using the claimed modular rapid-deployment system, it is possible to assemble the entire house structure without special knowledge and without tools, in a minimum amount of time, even by a single person, with the possibility of rapid disassembly, relocation to another site, and reassembly, and so on an unlimited number of times.

The rapidly assembled structure of the house constructed using the claimed system is transported by any available means of transport (or carried manually) to the installation site and assembled within a short period of time.

The system may be used as temporary or permanent housing, country or garden houses, tourist bases, seasonal hotels, fishing or hunting houses, for special events, for example for refugees affected by natural or man-made disasters, for the arrangement of storage facilities with tunnel transitions or isolated rooms, etc. It may also be used as an operational headquarters for rapid response services, for storage of goods and materials, or as refrigeration or freezing chambers when an additional compressor is connected.

The system also enables use for military purposes, including field hospitals, tactical modules, field dugouts, headquarters, barracks, and training camps, with the possibility of rapid relocation to other positions upon detection.

A comparative analysis of the above technical solution with the closest prior art shows that the implementation of the combination of essential features characterizing the proposed invention results in the emergence of qualitatively new technical properties as indicated above.

Since the combination of the above-described properties has not been previously established in the prior art, it can be concluded that the proposed technical solution meets the criterion of "inventive level."

In addition, in the known sources of patent and other scientific and technical information, no modular rapid-deployment systems have been found having the combination of essential features set forth in the present application; therefore, the proposed technical solution is considered to comply with the criterion of "novelty."

Furthermore, based on practical verification results, the proposed rapid deployment modular system is suitable for industrial application, since it does not contain any structural elements or materials that cannot be reproduced at the current level of science and technology development, in particular in the construction industry, and can be implemented using known technologies; therefore, the proposed technical solution is considered to comply with the criterion of "industrial applicability" and, consequently, may be granted legal protection.

## Claims

1. A modular rapid deployment system comprising a frame containing horizontally installed upper and lower longitudinal frame elements, supporting elements connected vertically to the horizontally installed lower and upper longitudinal frame elements, and panel elements having openings for passage of the supporting elements therethrough and comprising means for interconnecting panel elements with one another to form a wall, **characterized in that** it is configured to enable fixation of the vertically installed supporting elements in a working position to form a releasable connection and to enable locking, in the working position, of at least two adjacent horizontally installed longitudinal frame elements that also comprise means for installing horizontal supporting elements for forming a floor and/or ceiling or roof, which are arranged horizontally in the working position and, together with the panel elements through which they are passed, form the floor and/or ceiling or roof, respectively; therein, the horizontally installed lower and upper longitudinal frame elements are formed along the perimeter with four sides defining a polygon while the means for interconnecting panel elements are provided on at least two side edges of the panel elements along the length of these edges, enabling interconnection of the panel elements.

2. The modular system according to claim 1, **characterized in that** the vertically installed supporting element comprises, at its lower end portion, slots for passage of a lower rod contained in or installed in a cup or sleeve fixed in the lower longitudinal frame element, and for fixation of the supporting element in the working position by partial rotation thereof about its longitudinal axis.

3. The modular system according to claim 1, **characterized in that** it comprises a door unit, which at its lower portion has at least two pipe sections of the same diameter as the vertically installed supporting elements in the working position, fixed on both sides by wall panels formed from panel elements having recesses, and at its upper portion corresponding cups or sleeves for fixation by short supporting elements to the lower side of the upper longitudinal frame element with fixation in the working position, as well as a panel with a cut-out in the lower portion in accordance with protrusions on the frame of the door unit for fixing doors in the upper portion.

4. The modular system according to claim 1, **characterized in that** the upper longitudinal frame element comprises a lower L-shaped or U-shaped part and an upper L-shaped or U-shaped part, wherein the lower part comprises means for receiving fastening elements therein, the fastening elements securing the upper and lower L-shaped or U-shaped parts in the working position.

5. The modular system according to claim 1, **characterized in that** the upper longitudinal frame element comprises a lower L-shaped or U-shaped part and an upper L-shaped or U-shaped part, and the lower part comprises means for receiving fastening elements therein, which secure the upper and lower L-shaped or U-shaped parts in the working position, while the means for installing the fastening elements and the fastening elements themselves have a circular cross-sectional shape of the body and are provided with slots, and the fastening element comprises a flat upper end portion wider than the diameter of its body and is configured to be rotatable and to fix the upper L-shaped or U-shaped part in the working position.

6. The modular system according to claim 1, **characterized in that** the lower longitudinal frame elements are polygonal in cross-section and comprise openings for installation of vertically arranged supporting elements and recesses for installation of horizontally arranged supporting elements for forming a floor.

7. The modular system according to claim 1, **characterized in that** the vertically supporting elements are made in the form of a tube of circular cross-section and have vertical slots in the upper portion, which, in the working position of the supporting element, are located above openings in the lower portion of the upper longitudinal frame elements, and a metal plate or other locking means is passed through these slots, thereby fixing, by compression against the lower longitudinal frame element in the vertical direction, all panel elements through which the supporting element passes.

8. The modular system according to claim 1, **characterized in that** the horizontal floor and roof supporting elements are made in the form of a tube of circular cross-section and at their ends comprise means for connection to the upper and lower longitudinal frame elements for forming a floor and/or ceiling.

9. The modular system according to claim 1, **characterized in that** the means for interconnecting panel elements are formed as recesses on one side or sides and projections on the other side or sides.

10. The modular system according to claim 1, **characterized in that** the means for interconnecting panel elements are formed as projections along the perimeter of the panel elements, and the panel elements are configured to be installed with either of their two working sides facing outward.

11. The modular system according to claim 1, **characterized in that** it comprises L-shaped corner connectors connecting longitudinal frame elements at an angle of 90°, with arrangement and fixation therein of supporting elements by rotation about the axis of the supporting element, thereby locking, in the working position, at least two adjacent horizontally installed longitudinal frame elements.

12. The modular system according to claim 1, **characterized in that** it comprises T-shaped intermediate connectors for connecting longitudinal frame elements along their length, with arrangement and fixation therein of supporting elements by rotation about the axis of the supporting element, thereby locking, in the working position, at least three adjacent horizontally installed longitudinal frame elements.

13. The modular system according to claim 1, **characterized in that** it comprises X-shaped intermediate connectors for connecting longitudinal frame elements along their length, with arrangement and fixation therein of supporting elements by rotation about the axis of the supporting element, thereby locking, in the working position, at least four adjacent horizontally installed longitudinal frame elements.

14. The modular system according to claim 1, **characterized in that** the longitudinal frame elements together with the connectors form upper and lower frame structures of the frame, each of which is divided into sections by longitudinal frame elements connected at the centre of each frame by an X-shaped connector.

15. The modular system according to claim 1, **characterized in that** it comprises I-shaped intermediate connectors for converting an L-shaped connector into a T-shaped connector, and a T-shaped connector into an X-shaped connector by attachment through corresponding openings in the side surface of L-shaped connectors and T-shaped connectors.

16. The modular system according to claim 1, **characterized in that** it comprises wall corner elements which, in the working position, are threaded onto the supporting elements and installed on the corner connectors, with connection to the panel elements.

17. The modular system according to claim 1, **characterized in that** it comprises wall intermediate elements which, in the working position, are threaded onto the supporting elements and installed on the intermediate connectors, with connection to the panel elements and/or to window units and/or to a door unit.

18. The modular system according to claim 1, **characterized in that** it comprises at least one door unit configured for connection to panel elements and/or to intermediate elements installed on intermediate connectors, and comprising at least one opening for passage of a supporting element.

19. The modular system according to claim 1, **characterized in that** it comprises at least one window unit configured for connection to panel elements and/or to intermediate elements installed on intermediate connectors, and comprising openings for passage of supporting elements therethrough.

20. The modular system according to claim 1, **characterized in that** it is configured to enable reconfiguration of the resulting structure.

21. The modular system according to claim 1, **characterized in that** polyurethane foam (PUF) or another filler material is used as a filling material of the panel element, the filler material having properties enabling dense penetration into the structure of the outer and inner covering materials of the panels, with bonding capability and reproduction of the required shape of the panel element.
